# EUROPEAN PATENT SPECIFICATION

(11) **EP 3 477 821 B1**
(45) Date of publication and mention of the grant of the patent: **03.03.2021**
(21) Application number: 17813059.7
(22) Date of filing: 11.05.2017
(51) Int. Cl.: H02K 1/18

(54) **STATOR FOR DYNAMO-ELECTRICAL MACHINE**
STATOR FÜR EINE DYNAMOELEKTRISCHE MASCHINE
STATOR POUR MACHINE DYNAMOÉLECTRIQUE

(30) Priority: 17.06.2016 JP 2016121039
(43) Date of publication of application: 01.05.2019
(73) Proprietor: Yamaha Motor Electronics Kabushiki Kaisha, Shuchi-gun Shizuoka 437-0292 (JP)
(72) Inventor: ESAKI, Katsuya, Shuchi-gun Shizuoka 437-0292 (JP); NAGATA, Toshihiko, Shuchi-gun Shizuoka 437-0292 (JP)
(74) Representative: Grünecker Patent- und Rechtsanwälte PartG mbB
(86) International application number: PCT/JP2017/017899
(87) International publication number: WO 2017/217154

(56) References cited:
- CN-B- 101 931 274
- FR-A- 1 127 779
- JP-A- S6 035 929
- JP-A- 2000 125 525
- JP-A- 2000 125 525
- JP-A- 2006 158 003
- JP-A- 2007 082 275
- JP-A- 2007 143 239
- JP-A- 2007 181 270
- JP-A- 2012 115 005
- JP-A- 2012 115 005
- JP-U- S50 106 601
- JP-U- S50 106 601
- US-A1- 2003 098 628
- US-A1- 2004 021 393
- US-A1- 2011 101 816

## Description

### TECHNICAL FIELD

The present invention relates to a stator for a rotating electric machine, and more specifically to a stator for a rotating electric machine in which a core and teeth are provided as separate members.

### BACKGROUND ART

Document JP S60 35929 A discloses a stator for a rotating electric machine according to the preamble of claim 1. Furthermore, document CN 101 931 274 B shows a modular motor stator structure, comprising a cylinder or an annular stator support and a stator tooth module, wherein straight grooves are evenly distributed on the outer surface of the cylinder stator support or the inner surface of the annular stator support, and two side walls of each straight groove are provided with semicircular sockets. The stator tooth module is provided with stator tooth iron cores and coils, each stator tooth iron core comprises a tooth crown, a tooth body, a tooth yoke and a tooth root, two sides of the tooth root are provided with semicircular sockets which correspond to the semicircular sockets in the straight grooves of the stator support. The tooth roots of the stator tooth iron cores are respectively arranged in the straight grooves of the stator supports. The semicircular socket on the side wall of each tooth root forms a round hole with the semicircular in the straight grooves of the stator support, a positioning fixed pin is inserted in the round hole. An insulated coiling frame is arranged on each stator tooth iron core, the coils are coiled on the coiling frame. Additionally, as an example of a conventional technique of this kind, Patent Literature 1 discloses a rotating electric machine in which a yoke and a magnetic pole are provided as separate members. In this rotating electric machine, in order to fix the magnetic pole to the yoke, the yoke has a dovetail groove and the magnetic pole has a dovetail portion. The magnetic pole has an iron core portion around which a coil is wound. A slot is provided at the dovetail portion of the magnetic pole and in part of the iron core portion. Further, the dovetail portion is provided with a circular hole which has its center on the slot. When the magnetic pole is fixed to the yoke, the dovetail portion of the magnetic pole is fitted into the dovetail groove of the yoke, and a round rod is pressed into the circular hole provided in the dovetail portion, whereby the dovetail portion is pressed open in two directions.

### CITATION LIST

### PATENT LITERATURE

Patent Literature 1: JPU S50-106601

### SUMMARY OF INVENTION

### TECHNICAL PROBLEM

In the rotating electric machine shown in Patent Literature 1, the magnetic pole is fixed to the yoke, under a state that the coil is wound around the iron core portion. Therefore, it is likely that when the dovetail groove of the yoke and the dovetail portion of the magnetic pole are fitted together, the coil is moved beyond a yoke-side end portion of the iron core portion, toward the yoke, making the yoke and the coil into contact with each other. This makes it difficult or impossible to fit the dovetail groove and the dovetail portion to each other. In order to prevent this problem, there may be an arrangement that the coil is wound not to reach the yoke-side end portion of the iron core portion, and the yoke and the magnetic pole are fixed under this state. This, however, leaves a gap between the yoke and the coil, leading to a possibility that the coil moves off its position and/or a magnetic field becomes smaller.

Therefore, a primary object of the present invention is to provide a stator for a rotating electric machine which is easy to assemble and is capable of providing a greater magnetic field.

### SOLUTION TO PROBLEM

Above object is achieved by a stator for a rotating electric machine according to claim 1.

According to an aspect disclosed herein, there is provided a stator for a rotating electric machine, which includes an annular core; a tooth extending in a radial direction of the core and connected to the core; an insulator attached to the tooth; a coil wound around the tooth, with the insulator in between; and a pin for fixing the tooth to the core. The core includes a recess opening toward the tooth and gradually widening from the tooth toward the core in the radial direction of the core. The tooth includes a tooth main body around which the coil is wound; a brim portion protruding from a core-side end portion of the tooth main body in a direction perpendicular to an axial direction of the core and to the radial direction of the core, beyond the core-side end portion of the tooth main body; a tongue protruding from the core-side end portion of the tooth main body toward the core, with a gradually increasing width, and fittable into the recess; a slot extending from a tip portion of the tongue in the radial direction of the core, being formed from a first end portion of the tongue in the axial direction of the core to a second end portion of the tongue; and a pin hole formed in the slot and penetrating the tongue in the axial direction of the core. The pin is capable of being pressed into the pin hole under a state where the recess and the tongue are fitted to each other, and the tongue widens in directions which are perpendicular to the axial direction of the core and to the radial direction of the core and presses the recess when the pin is pressed into the pin hole under the state where the recess and the tongue are fitted to each other.

In the present invention, it is possible, since the tooth has the brim portion, to prevent the coil which is wound around the tooth main body from moving beyond the brim portion toward the core. In other words, it is possible to prevent the coil from shifting beyond the brim portion toward the core. This makes sure that when the recess of the core and the tongue of the tooth are fitted to each other, the core and the coil do not interfere with each other, making it possible to fit the recess of the core and the tongue of the tooth with each other easily, thereby making it easy to assemble the core and the tooth. Also, as the pin is pressed into the pin hole under the state that the recess and the tongue are fitted to each other, the tongue opens in the direction which is perpendicular to the axial direction of the core and to the radial direction of the core, thereby making contact with the recess and then pressing the recess. Since the recess and the tongue are formed to be gradually wider from the tooth toward the core, pressing the recess by the tongue causes the tooth to move toward the core in the radial direction of the core, bringing the core and the brim portion of the tooth into firm contact, thereby fixing the tooth to the core. Therefore, by forming the brim portion at the core-side end portion of the tooth main body, it becomes possible to reduce a gap portion in the magnetic path formed in the core and the tooth when the rotor of the rotating electric machine makes rotation with respect to the stator, and therefore to obtain a greater magnetic field.

Preferably, the slot extends from the tip portion of the tongue to part of the tooth main body in the radial direction of the core, and the pin hole's center in the radial direction of the core is closer to the tooth main body than a center of the slot in the radial direction of the core is. In this case, since it is possible to form the pin hole near the core-side end portion of the tooth main body, pressing the pin into the pin hole under the state that the recess and the tongue are fitted to each other makes it possible to open the tongue as a whole, from the pin hole through the tip portion of the tongue in directions which are perpendicular to the axial direction of the core and to the radial direction of the core. Therefore, a portion of the tongue near the core-side end portion of the tooth main body can make contact with the recess easily, and it is at least possible to reduce gaps between the portion of the tongue near the core-side end portion of the tooth main body and the recess. This makes it possible to further reduce the gap portion in the magnetic path which is formed in the core and the tooth, and to obtain a greater magnetic field.

Further preferably, at least part of the pin hole is formed in the tooth main body. In this case, since it is possible to form the pin hole near the core-side end portion of the tooth main body, pressing the pin into the pin hole under the state that the recess and the tongue are fitted to each other makes it possible to open the tongue as a whole, from the pin hole through the tip portion of the tongue in directions which are perpendicular to the axial direction of the core and to the radial direction of the core. Therefore, the portion of the tongue near the core-side end portion of the tooth main body can make contact with the recess easily, and it is at least possible to reduce gaps between the portion of the tongue near the core-side end portion of the tooth main body and the recess. This makes it possible to further reduce the gap portion in the magnetic path which is formed in the core and the tooth, and to obtain a greater magnetic field.

Under a state where the recess and the tongue are fitted to each other, there is a greater gap between the recess and the tongue on a side closer to the tip portion of the tongue than on a side closer to a base portion of the tongue. In this case, when the pin is pressed into the pin hole under the state that the recess and the tongue are fitted to each other, it is possible to open the tongue as a whole, from the pin hole through the tip portion of the tongue in directions which are perpendicular to the axial direction of the core and to the radial direction of the core. In this step, the tongue opens on a fulcrum which is near an end portion of the slot in the core-side end portion of the tooth main body. Therefore, an amount of movement of the tongue is greater on a side closer to the tip portion thereof than on a side closer to the base portion thereof. In such a case, designing the gap between the recess and the tongue so that the gap on the side closer to the tip portion of the tongue is greater than the gap on the side closer to the base portion of the tongue makes more uniform contact between the recess and the tongue, entirely from the base portion of the tongue to the tip portion of the tongue when the tongue opens. This makes it possible to further reduce the gap portion in the magnetic path which is formed in the core and the tooth, and to obtain a greater magnetic field.

Preferably, a plurality of the teeth are disposed in a circumferential direction of the core, and mutually adjacent two of the teeth have their brim portions in contact with each other. In this case, it becomes possible to even further reduce the gap portion in the magnetic path which is formed in the core and the tooth, and to obtain an even greater magnetic field.

Further preferably, the tooth is made of a metal, and the insulator is made of a resin. In this case, it is possible to ensure strength with the tooth which is made of metal, and therefore it becomes possible to reduce a thickness of the insulator which is made of resin and is to be attached to the tooth. Therefore, it is possible to reduce a thickness, i.e., a combined thickness in the radial direction of the core, of the brim portion and of the insulator which covers the brim portion in the case where the tooth includes the brim portion, as compared to a thickness in the radial direction of the core, of the brim portion of the insulator in a case where the tooth does not include the brim portion and only the insulator is formed with a brim portion (a portion corresponding to the brim portion of the tooth). As a result, it becomes possible to provide a sufficient range for winding the coil around the tooth which is provided with the brim portion, to increase the number of windings of the coil and therefore to obtain a large magnetic field.

Further, preferably, the pin is provided by a spring pin. In this case, it is possible to set a large tolerance for an inner diameter of the pin hole in which the spring pin is to be pressed than in cases where the pin is provided by a type other than the spring pin. This makes it possible to make manufacture at a low cost.

Preferably, the tooth extends more outward than the core in the radial direction of the core. In this case, the stator is suitably utilized for an outer rotor type rotating electric machine in which the rotor is disposed on an outer side than the teeth in the radial direction of the core.

Further preferably, the tooth extends more inward than the core in the radial direction of the core. In this case, the stator is suitably utilized for an inner rotor type rotating electric machine in which the rotor is disposed on an inner side than the teeth in the radial direction of the core.

### ADVANTAGEOUS EFFECTS OF INVENTION

According to the present invention, a stator for a rotating electric machine which is easy to assemble and is capable of providing a greater magnetic field is obtained.

### BRIEF DESCRIPTION OF DRAWINGS

Fig. 1 is a perspective view which shows a stator according to an embodiment of the present invention.
Fig. 2 is a plan view which shows the stator according to the embodiment of the present invention.
Fig. 3 is a perspective view which shows a core.
Fig. 4 is a perspective view which shows a tooth and an insulator.
Fig. 5 is a perspective view which shows a state where the insulator is partially attached to the tooth.
Fig. 6 is a perspective view which shows a state in where the insulator is attached to the tooth.
Fig. 7 is a perspective view which shows a coil assembly.
Fig. 8 is a sectional view which shows the coil assembly.
Fig. 9 is a drawing which shows a method for connecting the coil assembly to the core: Fig. 9(a) shows a state before the connection; Fig. 9(b) shows a state after the connection.
Fig. 10 is a drawing which shows a method for connecting the coil assembly to the core: Fig. 10(a) shows a state before a pin is pressed in; Fig. 10(b) shows a state after the pin is pressed in.
Fig. 11 is a sectional view which shows a state where the coil assembly is connected to the core (before the pin is pressed in).
Fig. 12 is a sectional view which shows a state where the coil assembly is fixed to the core (after the pin is pressed in).
Fig. 13 is a sectional view which shows two mutually adjacent coil assemblies fixed to the core.
Fig. 14 is a perspective view which shows a stator according to another embodiment of the present invention.
Fig. 15 is a plan view which shows the stator according to the embodiment in Fig. 14.
Fig. 16 is a perspective view which shows a core according to the embodiment in Fig. 14.
Fig. 17 is a perspective view which shows a tooth and an insulator according to the embodiment in Fig. 14.
Fig. 18 is a perspective view which shows a state where the insulator is partially attached to the tooth according to the embodiment in Fig. 14.
Fig. 19 is a perspective view which shows a state where the insulator is attached to the tooth according to the embodiment in Fig. 14.
Fig. 20 is a perspective view which shows a coil assembly according to the embodiment in Fig. 14.
Fig. 21 is a perspective view which shows the coil assembly according to the embodiment in Fig. 14.
Fig. 22 is a sectional view which shows the coil assembly according to the embodiment in Fig. 14.
Fig. 23 is a drawing which shows a method for connecting the coil assembly according to the embodiment in Fig. 14 to the core: Fig. 23(a) shows a state before the connection; Fig. 23(b) shows a state after the connection.
Fig. 24 is a drawing which shows a method for fixing the coil assembly according to the embodiment in Fig. 14 to the core: Fig. 24(a) shows a state before a pin is pressed in; Fig. 24(b) shows a state after the pin is pressed in.
Fig. 25 is a sectional view which shows a state where the coil assembly according to the embodiment in Fig. 14 is connected to the core (before the pin is pressed in).
Fig. 26 is a sectional view which shows a state where the coil assembly according to the embodiment in Fig. 14 is fixed to the core (after the pin is pressed in).

### DESCRIPTION OF EMBODIMENTS

Hereinafter, preferred embodiments of the present invention will be described with reference to the drawings.

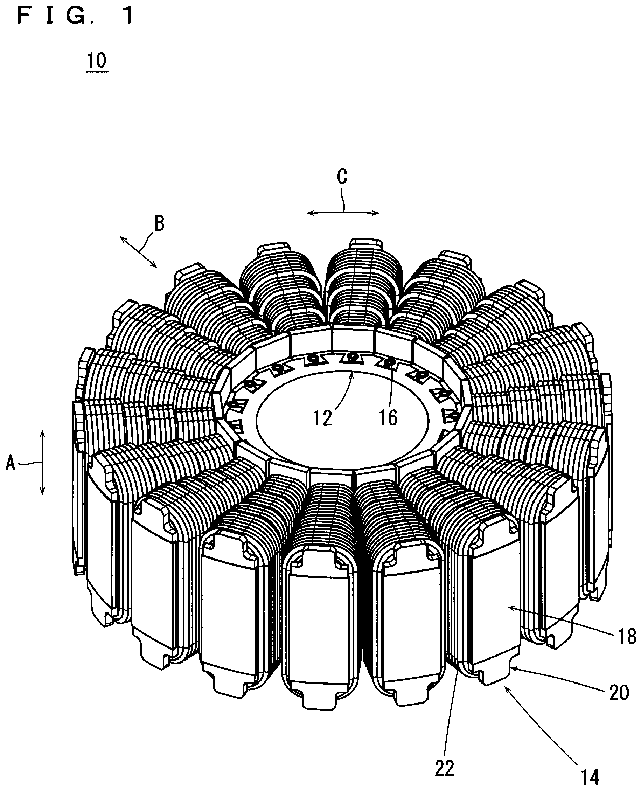

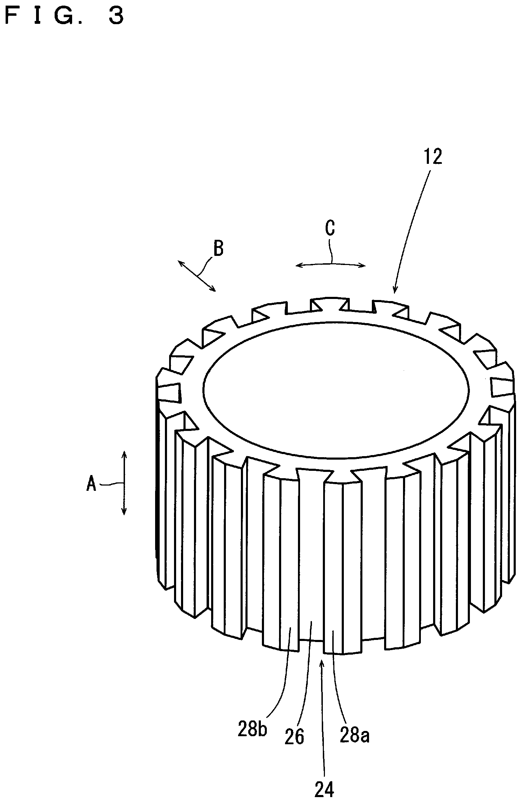

It should be noted here that the term axial direction of a core 12 as used in an embodiment of the present invention refers to a direction indicated by Arrow A in Fig. 1 and Fig. 3; the term radial direction of the core 12 refers to a direction indicated by Arrow B in Fig. 1 through Fig. 3; and the term circumferential direction of the core 12 refers to a direction indicated by Arrow C in Fig. 1 through Fig. 3.

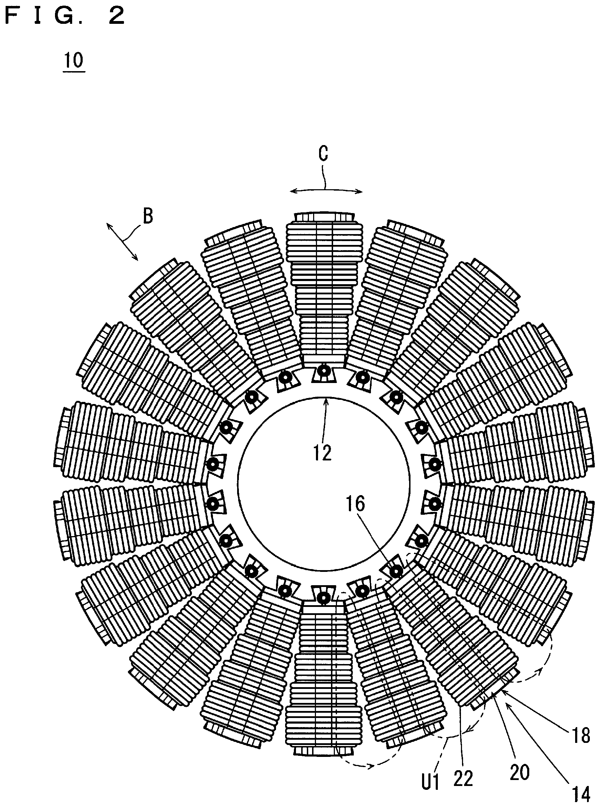

Referring to Fig. 1 and Fig. 2, a stator 10 according to an embodiment of the present invention includes the core 12, a plurality (eighteen, in the present embodiment) of coil assemblies 14 and a plurality (eighteen, in the present embodiment) of pins 16. The core 12 is cylindrical. The core 12 has an outer circumferential surface, to which the plurality of coil assemblies 14 are connected side by side in a circumferential direction of the core 12. Each in the plurality of coil assemblies 14 which are connected to the core 12 is fixed to the core 12 with a pin 16. The coil assembly 14 includes a tooth 18, an insulator 20 and a coil 22. The coil 22 is wound around the tooth 18 with the insulator 20 in between.

Referring to Fig. 3, the core 12 includes a plurality (eighteen, in the present embodiment) of connecting portions 24. In order to allow connection of each of the plurality of coil assemblies 14, the plurality of connecting portions 24 are formed to extend in an axial direction of the core 12, side by side in the circumferential direction of the core 12, in the outer circumferential surface of the core 12. The plurality of connecting portions 24 each include a recess 26 and seating surfaces 28a, 28b. The recess 26 recesses inward in a radial direction of the core 12, from the outer circumferential surface of the core 12. Also, the recess 26 extends in the axial direction of the core 12, from a first axial end portion of the core 12 through a second axial end portion thereof. In other words, the recess 26 is formed like a groove which extends in the outer circumferential surface of the core 12 in the axial direction of the core 12. Further, in a section perpendicular to the axial direction of the core 12, the recess 26 is left-right symmetrical with respect to a centerline of the recess 26 which extends in the radial direction of the core 12, and gradually widens inward in the radial direction of the core 12. The seating surfaces 28a, 28b extend on the outer circumferential surface of the core 12, in the axial direction of the core 12, along two ends of the recess 26 in the circumferential direction of the core 12. Also, in a section perpendicular to the axial direction of the core 12, the seating surfaces 28a, 28b are left-right symmetrical with each other and perpendicular with respect to the centerline of the recess 26 which extends in the radial direction of the core 12. The core 12 described as the above is an equivalent of a cylindrical member which has a section perpendicular to its axial direction formed into an outer shape of equilateral octadecagon, with each of its eighteen outer side surfaces formed with the recess 26 at its center. Each of the outer side surfaces other than the recess 26 is the seating surface 28a or 28b.

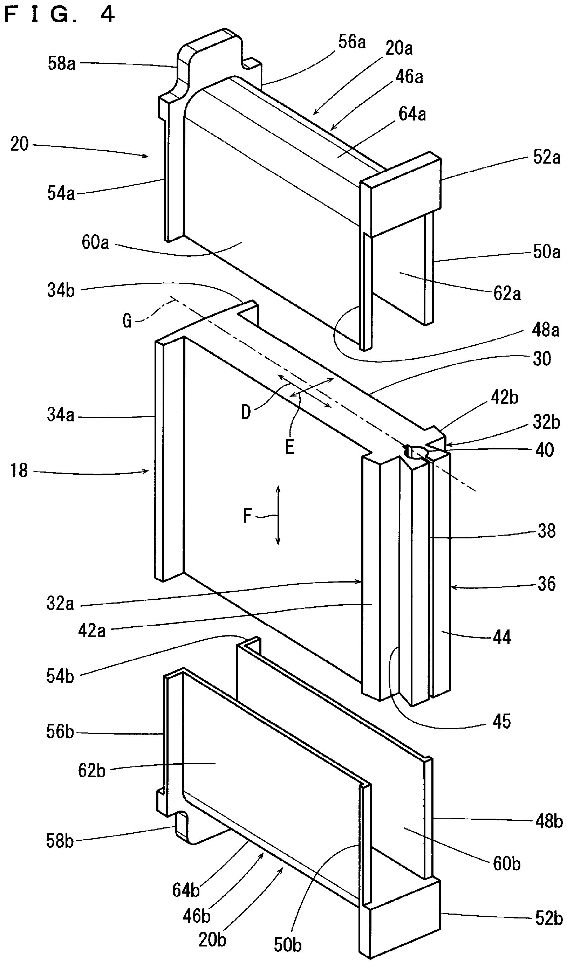

Referring to Fig. 4, the tooth 18 includes a tooth main body 30, brim portions 32a, 32b, brim portions 34a, 34b, a tongue 36, a slot 38 and a pin hole 40. Herein, the term longitudinal direction of the tooth main body 30 refers to a direction indicated by Arrow D in Fig. 4 through Fig. 8; the term lateral direction of the tooth main body 30 refers to a direction indicated by Arrow E in Fig. 4 through Fig. 8; and the term height direction of the tooth main body 30 refers to a direction indicated by Arrow F in Fig. 4 through Fig. 7. The tooth main body 30 (the tooth 18) has a dimension in a height direction, which is substantially equal to a dimension of the core 12 in the axial direction thereof.

The tooth main body 30 is formed like a rectangular plate.

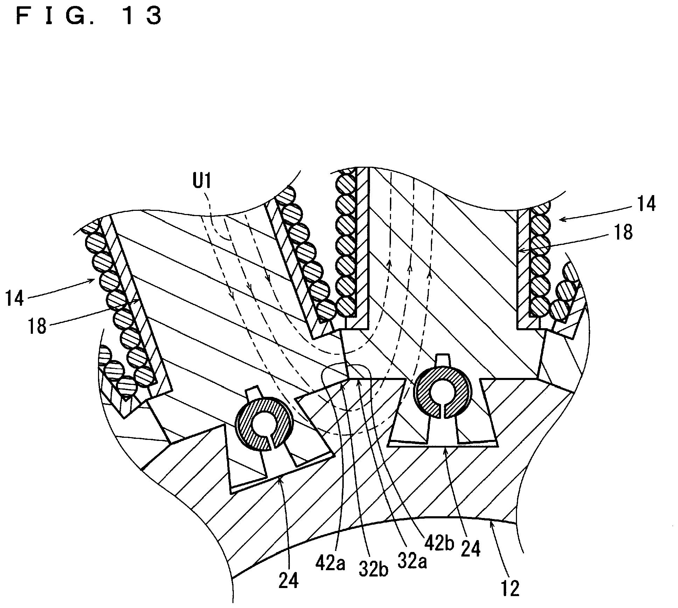

At a first end portion in a longitudinal direction of the tooth main body 30, the brim portions 32a, 32b are formed to protrude both ways in a lateral direction of the tooth main body 30. The brim portions 32a, 32b extend in the height direction of the tooth main body 30, along the first longitudinal end portion of the tooth main body 30. Also, the brim portions 32a, 32b are formed in left-right symmetry with each other with respect to a centerline G which passes through the center in the lateral direction of the tooth main body 30 and extends in the longitudinal direction of the tooth main body 30. Further, the brim portions 32a, 32b have their amount of protrusion gradually decreased in a direction toward the tongue 36. Because of this arrangement, while details will be described later, when the plurality of coil assemblies 14 are fixed to the core 12, two mutually adjacent coil assemblies 14 come into a relationship that the brim portion 32a of the tooth 18 in one of the coil assemblies 14 has its tip surface 42a in contact with a tip surface 42b of the brim portion 32b of the tooth 18 in the other coil assembly 14 in an overlapping fashion (see Fig. 13).

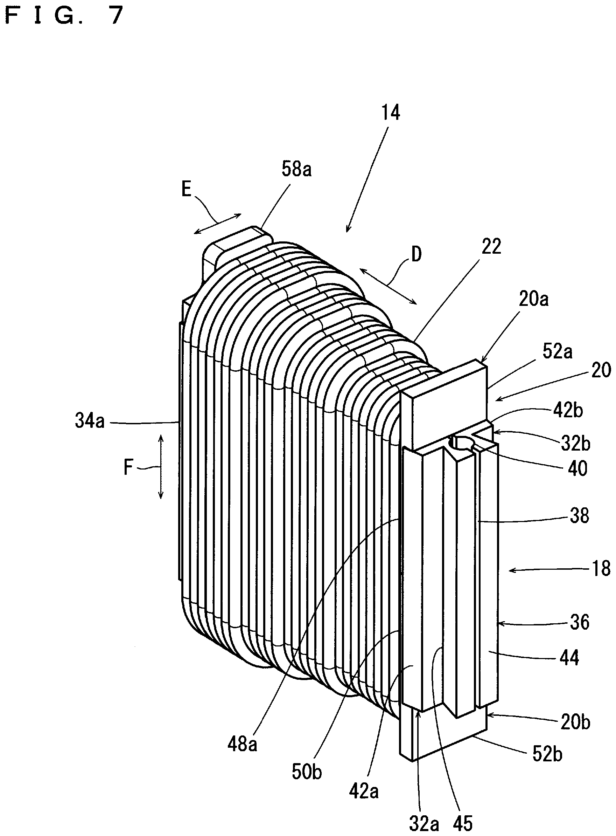

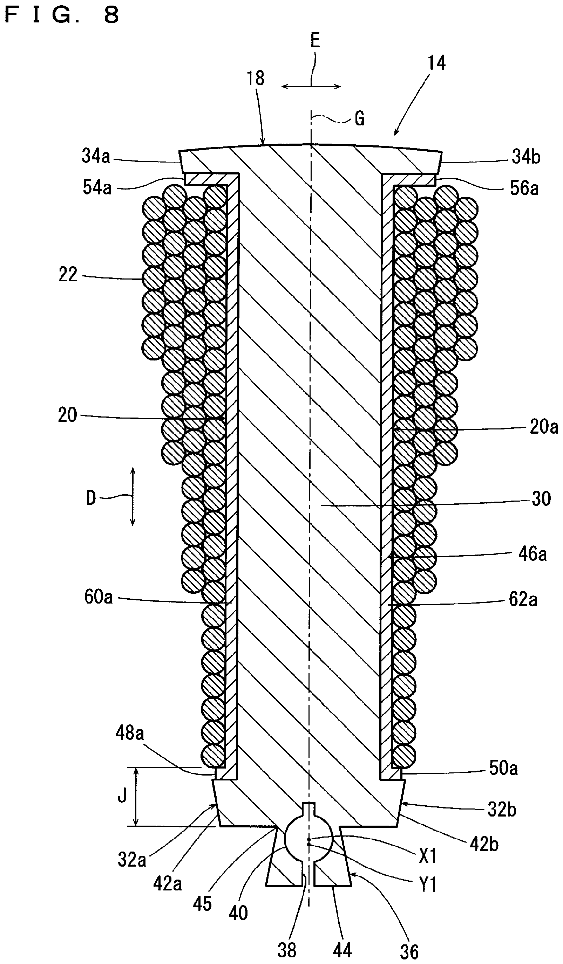

At a second longitudinal end portion of the tooth main body 30, the brim portions 34a, 34b are formed to protrude both ways in the lateral direction of the tooth main body 30. The brim portions 34a, 34b extend in the height direction of the tooth main body 30, along the second longitudinal end portion of the tooth main body 30. Also, the brim portions 34a, 34b are formed in left-right symmetry with each other with respect to the centerline G. Further, the brim portions 34a, 34b protrude by an amount which is larger than the amount by which the brim portions 32a, 32b protrude. As will be described later, the coil 22 is wound around the tooth 18 with the insulator 20 in between, in a single layer on the side closest to the brim portions 32a, 32b and in four layers on the side closest to the brim portions 34a, 34b (see Fig. 7 and Fig. 8). Therefore, when the coil 22 is wound around the tooth 18 with the insulator 20 in between, the coil 22 is thicker on the side closer to the brim portions 34a, 34b than on the side closer to the brim portions 32a, 32b. For this reason, as has been described earlier, the brim portions 34a, 34b have their amount of protrusion larger than the amount of protrusion of the brim portions 32a, 32b, whereby it becomes possible to prevent more reliably the problem that the coil 22 comes off the tooth main body 30 in the longitudinal direction of the tooth main body 30.

At the first longitudinal end portion of the tooth main body 30, the tongue 36 is formed to protrude in the longitudinal direction of the tooth main body 30. The tongue 36 extends in the height direction of the tooth main body 30, along the first longitudinal end portion of the tooth main body 30. Also, the tongue 36 is left-right symmetrical with respect to the centerline G, and gradually wider toward its tip portion 44.

The slot 38 extends in the longitudinal direction of the tooth main body 30, from a center of the tip portion 44 of the tongue 36 in the lateral direction of the tooth main body 30, into part of the tooth main body 30. In other words, the slot 38 is on the centerline G. Preferably, the slot 38 is formed not to extend beyond the brim portions 32a, 32b, toward the second end portion in the longitudinal direction of the tooth main body 30. Also, the slot 38 is formed from a first end portion (first end surface) to a second end portion (second end surface) of the tooth main body 30 and of the tongue 36 in the height direction of the tooth main body 30.

The pin hole 40 is circular in its section perpendicular to the height direction of the tooth main body 30, and penetrates the tongue 36 and the tooth main body 30 in the height direction of the tooth main body 30. In other words, the pin hole 40 is formed through the tongue 36 and through the tooth main body 30. As described, part of the pin hole 40 is formed in the tooth main body 30. Also, in the longitudinal direction of the tooth main body 30, a center X1 of the pin hole 40 is closer to the tooth main body 30 than a center Y1 of the slot 38 is (see Fig. 8). The center Y1 is a middle point from the two ends of the slot 38 in the longitudinal direction of the tooth main body 30.

The insulator 20 includes an upper member 20a and a lower member 20b. The upper member 20a includes an upper member main body 46a and brim portions 48a, 50a, 52a, 54a, 56a, 58a. Herein, a longitudinal direction, a lateral direction, and a height direction of the upper member main body 46a when the insulator 20 (the upper member 20a) is attached to the tooth 18 (the tooth main body 30) are identical with the longitudinal direction of the tooth main body 30 indicated by Arrow D, the lateral direction of the tooth main body 30 indicated by Arrow E, and the height direction of the tooth main body 30 indicated by Arrow F, respectively. The upper member main body 46a is formed to have a generally U-shaped section, and includes a pair of side portions 60a, 62a and a jointing portion 64a which joints the pair of side portions 60a, 62a to each other at their one end portion. The pair of side portions 60a, 62a are formed like thin plates extending in the longitudinal direction of the upper member main body 46a. Also, the pair of side portions 60a, 62a are formed to face each other in the lateral direction of the upper member main body 46a. The jointing portion 64a is formed to extend in the longitudinal direction of the upper member main body 46a, and to have a generally semicircular section which is perpendicular to the longitudinal direction of the upper member main body 46a. The brim portion 48a, the brim portion 50a and the brim portion 52a are formed integrally with each other, to protrude from a first longitudinal end portion of the upper member main body 46a, outward of the upper member main body 46a. The brim portions 48a, 50a protrude out of the pair of side portions 60a, 62a in the lateral directions of the upper member main body 46a respectively. Also, the brim portions 48a, 50a extend along the pair of side portions 60a, 62a in the height direction of the upper member main body 46a respectively. The brim portion 52a is formed like a rectangular plate and protrudes out of the jointing portion 64a, in the lateral directions and the height direction of the upper member main body 46a. Also, in the longitudinal direction of the upper member main body 46a, the brim portion 52a is thicker than the brim portions 48a, 50a. The brim portion 54a, the brim portion 56a and the brim portion 58a are formed integrally with each other, to protrude from a second longitudinal end portion of the upper member main body 46a, outward of the upper member main body 46a. The brim portions 54a, 56a protrude out of the pair of side portions 60a, 62a in the lateral directions of the upper member main body 46a respectively. Also, the brim portions 54a, 56a extend along the pair of side portions 60a, 62a in the height direction of the upper member main body 46a respectively. The brim portion 58a is formed as a platy portion having a shape like a hat in its section perpendicular to the longitudinal direction of the upper member main body 46a, and protrudes from the jointing portion 64a in the lateral directions and the height direction of the upper member main body 46a. In the longitudinal direction of the upper member main body 46a, the brim portion 58a is thicker than the brim portions 54a, 56a. The lower member 20b has the same shape and the same dimensions as the upper member 20a. Therefore, the above description of the upper member 20a should be read, with the term "upper member" replaced with "lower member" and the letter "a" in each reference symbol replaced with the letter "b", whereby description of the lower member 20b is omitted.

Referring to Fig. 4 through Fig. 6, description will be made for a method for attaching the insulator 20 to the tooth 18.

First, referring to Fig. 4, on both sides of the tooth main body 30 in the height direction, the upper member 20a and the lower member 20b are opposed to each other. Under this state, the brim portions 48a, 50a, 52a of the upper member 20a are on the side where there are the brim portions 32a, 32b of the tooth 18, whereas the brim portions 54a, 56a, 58a of the upper member 20a are on the side where there are the brim portions 34a, 34b of the tooth 18. Also, the brim portions 48b, 50b, 52b of the lower member 20b are on the side where there are the brim portions 32a, 32b of the tooth 18, whereas the brim portions 54b, 56b, 58b of the lower member 20b are on the side where there are the brim portions 34a, 34b of the tooth 18.

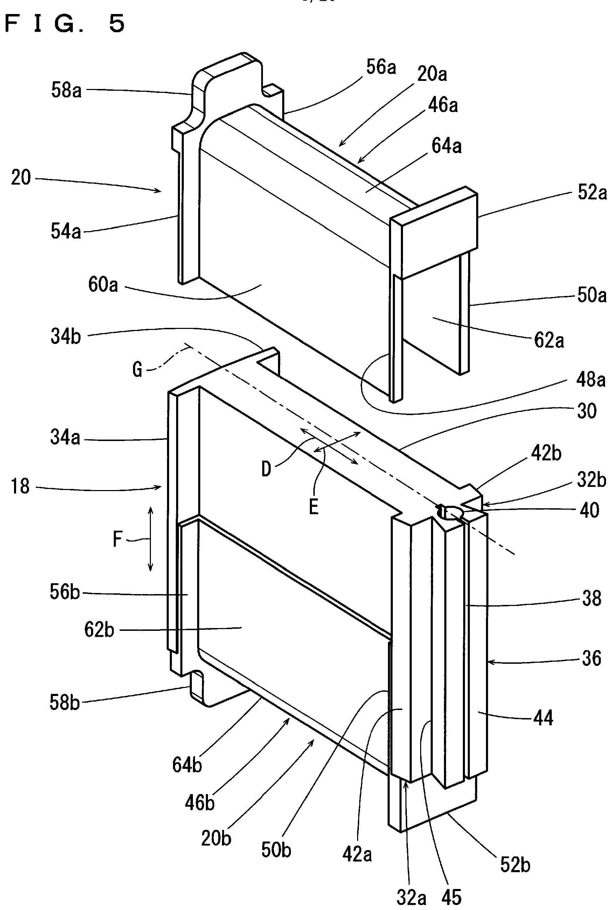

Next, referring to Fig. 5, the lower member 20b is moved toward the tooth main body 30, fitting the tooth main body 30 between the pair of side portions 60b, 62b, whereby the lower member 20b is attached to the tooth 18.

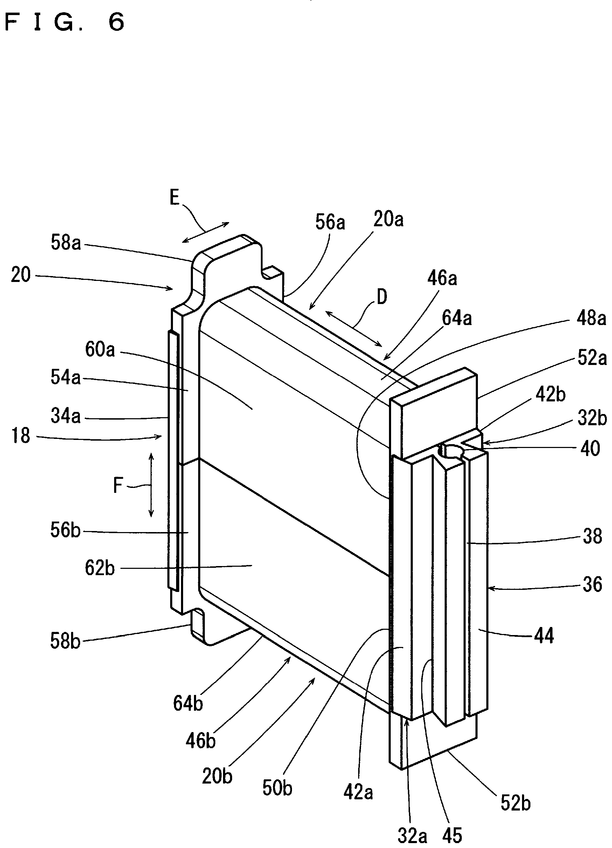

Then, referring to Fig. 6, the upper member 20a is moved toward the tooth main body 30, fitting the tooth main body 30 between the pair of side portions 60a, 62a, whereby the upper member 20a is attached to the tooth 18.

In this way, the insulator 20 is attached to the tooth 18. Under the state that the insulator 20 is attached to the tooth 18, the tooth main body 30 is covered by the upper member main body 46a and the lower member main body 46b. Also, in the longitudinal direction of the tooth main body 30, the brim portion 32a of the tooth 18 is overlapped by the brim portions 48a, 50b of the insulator 20, and the brim portion 32b of the tooth 18 is overlapped by the brim portions 50a, 48b of the insulator 20. Further, in the longitudinal direction of the tooth main body 30, the brim portion 34a of the tooth 18 is overlapped by the brim portions 54a, 56b of the insulator 20, and the brim portion 34b of the tooth 18 is overlapped by the brim portions 56a, 54b of the insulator 20. Therefore, when the coil 22 is wound around the tooth main body 30, as will be described later, under the state that the insulator 20 is attached to the tooth 18, there is no contact between the tooth main body 30 and the coil 22 since there are the upper member main body 46a and the lower member main body 46b between the tooth main body 30 and the coil 22. Also, there are the brim portions 48a, 50b of the insulator 20 between the brim portion 32a of the tooth 18 and the coil 22, whereas there are the brim portions 50a, 48b of the insulator 20 between the brim portion 32b of the tooth 18 and the coil 22, so there is no contact between the brim portions 32a, 32b and the coil 22. Further, there are the brim portions 54a, 56b of the insulator 20 between the brim portion 34a of the tooth 18 and the coil 22, whereas there are the brim portions 56a, 54b of the insulator 20 between the brim portion 34b of the tooth 18 and the coil 22, so there is no contact between the brim portions 34a, 34b and the coil 22. As understood, by attaching the insulator 20 to the tooth 18, it is possible to prevent contact between the tooth 18 and the coil 22.

Referring to Fig. 6 through Fig. 8, the coil 22 is wound around the tooth 18 with the insulator 20 in between. Fig. 8 is a sectional view showing a section which is perpendicular to the height direction of the tooth main body 30 in Fig. 7. The coil 22 is wound around outer surfaces of the upper member main body 46a and the lower member main body 46b of the insulator 20. Also, on the outer surfaces of the upper member main body 46a and the lower member main body 46b, the coil 22 is wound between the brim portions 48a, 50a, 52a, 48b, 50b, 52b and the brim portions 54a, 56a, 58a, 54b, 56b, 58b. The coil 22 is wound in a single layer on a side closest to the brim portions 48a, 50a, 52a, 48b, 50b, 52b, and then wound sequentially in two layers, three layers and then four layers toward a side closer to the brim portions 54a, 56a, 58a, 54b, 56b, 58b. By winding the coil 22 around the tooth 18 with the insulator 20 in between, the coil assembly 14 is obtained. The tooth 18 and the insulator 20 may be made of various materials. For instance, the tooth 18 is made of a metal, whereas the insulator 20 is made of a resin.

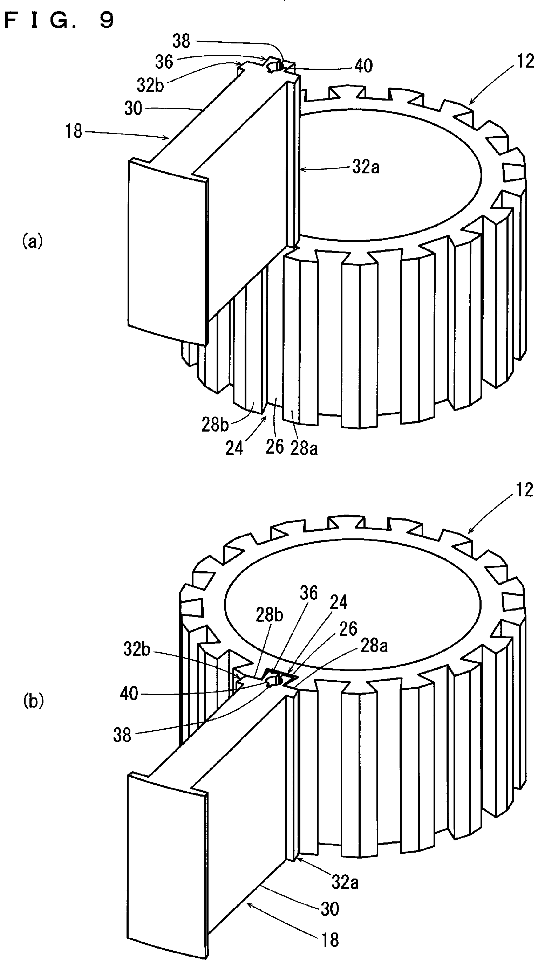

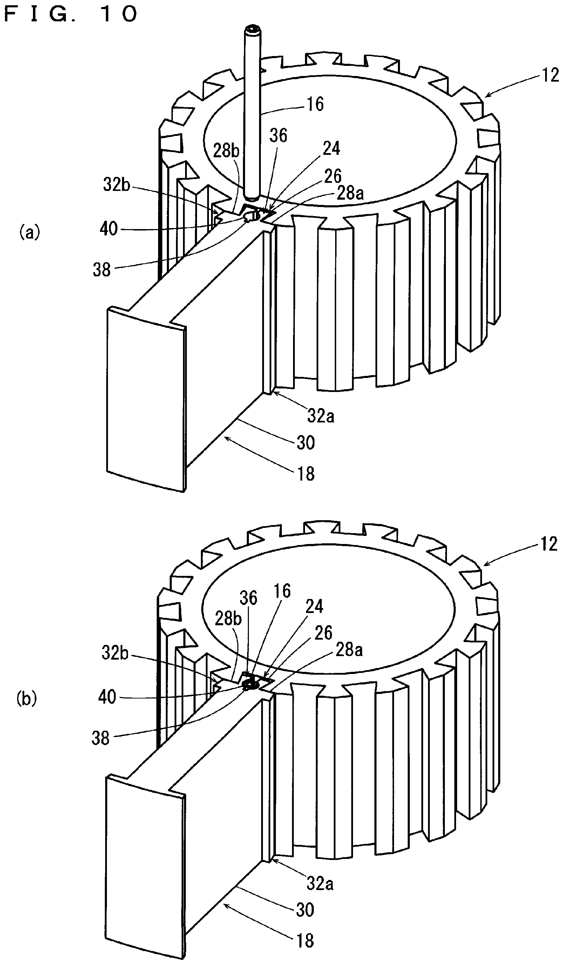

Referring to Fig. 9 and Fig. 10, description will be made for a method for fixing the coil assembly 14 to the core 12. It should be noted here that Fig. 9 and Fig. 10 do not show the insulator 20 or the coil 22 in order to avoid complexity in the drawings.

Referring first to Fig. 9(a), the core 12 and the tooth 18 are brought to predetermined positions, in alignment with each other in the axial direction of the core 12. In this step, it is desirable that the height direction and the longitudinal direction of the tooth main body 30 are in alignment with the axial direction and the radial direction of the core 12 respectively. Then, the tooth 18 is moved in the axial direction of the core 12 to fit the tongue 36 into the recess 26.

Referring to Fig. 9(b), the tooth 18 is moved in the axial direction of the core 12 to a position where both end portions of the core 12 in the axial direction of the core 12 are generally flush with corresponding end portions of the tooth 18 in the height direction of the tooth main body 30. As understood, the tooth 18 is connected to the outer circumferential surface of the core 12, to extend beyond the core 12, outward in the radial direction of the core 12.

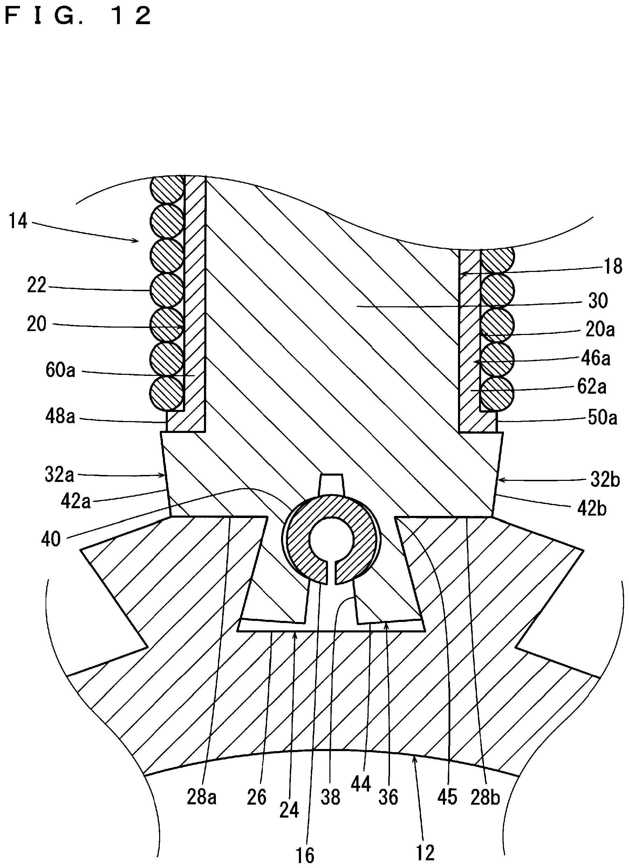

Referring to Fig. 10(a), the pin 16 may be selected from many kinds of pins known publicly. In the present embodiment, the pin 16 is provided by a spring pin which has a generally C-shaped section (see Fig. 12). The pin 16 has a diameter, which is slightly larger than that of the pin hole 40. However, the pin 16 has its two end portions tapered so that their diameters are slightly smaller than that of the pin hole 40. This makes it easy to press the pin 16 into the pin hole 40. Also, the pin 16 has a length which is generally equal to the dimension of the core 12 in the axial direction of the core 12 and the dimension of the tooth 18 in the height direction of the tooth main body 30. The pin 16 is formed so that it is capable of being pressed into the pin hole 40 under the condition that the recess 26 and the tongue 36 are fitted with each other. The pin 16 as has been described is held in alignment with the pin hole 40, in the axial direction of the core 12. Then, the pin 16 is moved in the axial direction of the core 12 to press into the pin hole 40. While details will be described later, as the pin 16 is pressed into the pin hole 40, the tongue 36 is pressed outward by the pin 16, and the tongue 36 opens in the lateral direction of the tooth main body 30. As it opens in the lateral direction of the tooth main body 30, the tongue 36 presses side surfaces of the recess 26.

Finally, referring to Fig. 10(b), the pin 16 is pressed into the pin hole 40 to a position where both end portions of the tooth 18 are generally flush with corresponding end portions of the pin 16 in the axial direction of the core 12. Under this state, the tongue 36 presses the side surfaces of the recess 26 entirely, thereby fixing the tooth 18, i.e., the coil assembly 14, to the core 12. Under the state where the coil assembly 14 is fixed to the core 12, the axial direction and the radial direction of the core 12 become identical with the height direction and the longitudinal direction of the tooth main body 30.

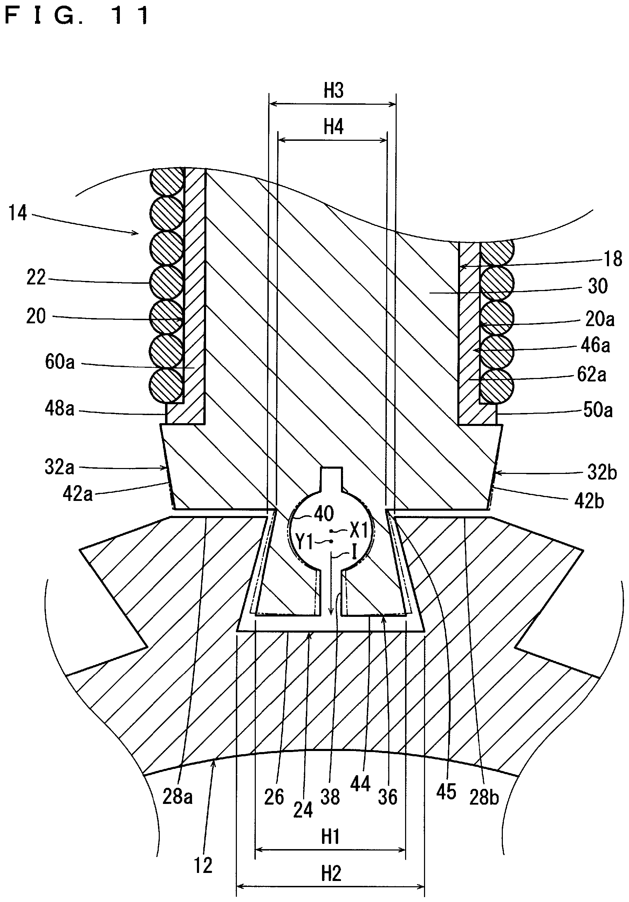

Fig. 11 is a sectional view taken perpendicularly to the axial direction of the core 12 shown in Fig. 9(b). Fig. 12 is a sectional view taken perpendicularly to the axial direction of the core 12 shown in Fig. 10(b). Referring to Fig. 11 and Fig. 12, detailed description will be made for a behavior of the tongue 36 when the coil assembly 14 is fixed to the core 12. It should be noted here that in Fig. 11 and Fig. 12 the insulator 20 and the coil 22 are shown rather than unillustrated.

Referring to Fig. 11, description will be made for a state where the coil assembly 14 has been connected to the core 12, the axial direction of the core 12 and the height direction of the tooth main body 30 are identical with each other, and the radial direction of the core 12 and the longitudinal direction of the tooth main body 30 are identical with each other. In this state, the recess 26 is open on its side facing the tooth 18, and is gradually wider in the radial direction of the core 12, from the tooth 18 inward of the core 12, whereas the tongue 36 protrudes from a core-12-side end portion of the tooth main body 30, inward of the core 12, with a gradually increasing width. Also, the brim portions 32a, 32b protrude from the core-12-side end portion of the tooth main body 30, in directions which are perpendicular to the axial direction of the core 12 and to the radial direction of the core 12 (i.e., protrude in the lateral direction of the tooth main body 30), beyond the core-12-side end portion of the tooth main body 30. The slot 38 is formed so that it extends in the radial direction of the core 12 from the tip portion 44 of the tongue 36 to part of the tooth main body 30, and from a first end portion (first end face) of the tooth main body 30 and of the tongue 36 in the axial direction of the core 12 through a second end portion (second end face) thereof. The pin hole 40 penetrates the tooth main body 30 and the tongue 36 in the axial direction of the core 12. In the radial direction of the core 12, the pin hole 40 has its center X1 more closely to the tooth main body 30 than the center Y1 of the slot 38 is.

In the lateral direction of the tooth main body 30, the tip portion 44 of the tongue 36 has a width H1, which is smaller than a width H2 of a bottom surface portion of the recess 26, and greater than a width H3 of an opening of the recess 26 in the outer circumferential surface of the core 12. Also, in the lateral direction of the tooth main body 30, the tongue 36 has a base portion 45 having a width H4, which is smaller than the width H3 of the opening of the recess 26. The recess 26 and the tongue 36 are designed so that a gap between their side surfaces is greater on a side closer to the tip portion 44 of the tongue 36 than on a side closer to the base portion 45 of the tongue 36. The recess 26 and the tongue 36 arranged in this way are fittable with each other movably in the axial direction of the core 12. Also, in the lateral direction of the tooth main body 30, the width H1 of the tip portion 44 of the tongue 36 is greater than the width H3 of the opening of the recess 26, whereby it is possible, even if the pin 16 is not pressed into the pin hole 40, to prevent the coil assembly 14 from dislocating outward in the radial direction of the core 12. Since the slot 38 is open on the tip-portion-44 side of the tongue 36, pressing the pin 16 into the pin hole 40 causes the tongue 36 and the brim portions 32a, 32b to be opened, as indicated by an alternate long and two dashes line, in the lateral direction of the tooth main body 30, on a fulcrum located near an end portion of the slot 38 in the core-12-side end portion of the tooth main body 30. As the tongue 36 opens in the lateral direction of the tooth main body 30, the tongue 36 makes contact with side surfaces of the recess 26 and then the tongue 36 presses the side surfaces of the recess 26. Since the recess 26 and the tongue 36 are gradually wider inward in the radial direction of the core 12, when the side surfaces of the recess 26 are pressed by the tongue 36 as described above, a force I which works inward in the radial direction of the core 12 is applied onto the tongue 36. Thus, the tongue 36 moves inward in the radial direction of the core 12 along the side surfaces of the recess 26.

Referring to Fig. 12 next, as the tongue 36 moves inward in the radial direction of the core 12, the coil assembly 14 itself also moves inward in the radial direction of the core 12. In other words, the tooth main body 30 and the brim portions 32a, 32b also move inward in the radial direction of the core 12. The movement brings the tooth main body 30 and the brim portion 32a into contact with the seating surface 28a, and the tooth main body 30 and the brim portion 32b into contact with the seating surface 28b. Thereafter, the tongue 36 continues to press the side surfaces of the recess 26. This causes the tooth main body 30 and the brim portion 32a to press the seating surface 28a, into firm contact with the seating surface 28a. Also, the tooth main body 30 and the brim portion 32b are caused to press the seating surface 28b into firm contact with the seating surface 28b. As understood, the tongue 36 presses the side surfaces of the recess 26, bringing the tooth main body 30 and the brim portions 32a, 32b into firm contact with the seating surfaces 28a, 28b, whereby the coil assembly 14 is fixed to the core 12.

Referring to Fig. 13, the core 12 with each of its plurality of connecting portions 24 having the coil assembly 14 fixed is the stator 10. Under this state, the plurality of coil assemblies 14 are disposed in the circumferential direction of the core 12, and any two mutually adjacent coil assemblies 14 are in a relationship that the tip surface 42a of the brim portion 32a of the tooth 18 in one of the coil assemblies 14 makes contact with the tip surface 42b of the brim portion 32b of the tooth 18 in the other coil assembly 14 in an overlapping fashion. Therefore, it is possible to fill a gap in a magnetic path U1 (see Fig. 2 and Fig. 13), which is formed in the core 12 and the tooth 18 when the rotor of the rotating electric machine rotates with respect to the stator 10, with the brim portions 32a, 32b. This makes it possible to obtain a greater magnetic field.

According to the stator 10 for a rotating electric machine as described, it is possible, since the tooth 18 has the brim portions 32a, 32b, to prevent the coil 22 which is wound around the tooth main body 30 from moving beyond the brim portions 32a, 32b toward the core 12. In other words, it is possible to prevent the coil 22 from shifting beyond the brim portions 32a, 32b toward the core 12. The arrangement makes sure that when the recess 26 of the core 12 and the tongue 36 of the tooth 18 are fitted to each other, the core 12 and the coil 22 do not interfere with each other, making it possible to fit the recess 26 of the core 12 and the tongue 36 of the tooth 18 with each other easily, thereby making it easy to assemble the core 12 and the tooth 18 (coil assembly 14). Also, as the pin 16 is pressed into the pin hole 40 under the state that the recess 26 and the tongue 36 are fitted to each other, the tongue 36 opens in the direction which is perpendicular to the axial direction of the core 12 and to the radial direction of the core 12, thereby making contact with the side surfaces of the recess 26 and then pressing the side surfaces of the recess 26. Since the recess 26 and the tongue 36 are formed to be gradually wider from the tooth 18 toward the core 12, pressing the side surfaces of the recess 26 by the tongue 36 causes the tooth 18 to move toward the core 12 in the radial direction of the core 12, bringing the core 12 and the brim portions 32a, 32b of the tooth 18 into firm contact, thereby fixing the tooth 18 to the core 12. Therefore, by forming the brim portions 32a, 32b at the core-12-side end portion of the tooth main body 30, it becomes possible to reduce a gap portion in the magnetic path U1 formed in the core 12 and the tooth 18 when the rotor of the rotating electric machine makes rotation with respect to the stator 10, and therefore to obtain a greater magnetic field.

Since it is possible to form the pin hole 40 near the core-12-side end portion of the tooth main body 30, pressing the pin 16 into the pin hole 40 under the state that the recess 26 and the tongue 36 are fitted to each other makes it possible to open the tongue 36 as a whole, from the pin hole 40 through the tip portion 44 of the tongue 36 in directions which are perpendicular to the axial direction of the core 12 and to the radial direction of the core 12. Therefore, a portion of the tongue 36 near the core-12-side end portion of the tooth main body 30 can make contact with the recess 26 easily, and it is at least possible to reduce a gap between the portion of the tongue 36 near the core-12-side end portion of the tooth main body 30 and the recess 26. This makes it possible to further reduce the gap portion in the magnetic path U1 which is formed in the core 12 and the tooth 18, and to obtain a greater magnetic field.

Also, the tongue 36 opens on the fulcrum located near the end portion of the slot 38 in the core-12-side end portion of the tooth main body 30. Therefore, the tongue 36 moves by a greater amount on a side near the tip portion 44 than on a side near the base portion 45. In such a case, designing the gap between the side surface of the recess 26 and the side surface of the tongue 36 so that the gap on the side near the tip portion 44 of the tongue 36 is greater than the gap on the side near the base portion 45 makes more uniform contact between the recess 26 and the tongue 36, entirely from the base portion 45 to the tip portion 44 of the tongue 36 when the tongue 36 opens. This makes it possible to further reduce the gap portion in the magnetic path U1 which is formed in the core 12 and the tooth 18, and to obtain a greater magnetic field.

Since a plurality of the teeth 18 are disposed in the circumferential direction of the core 12 and the brim portion 32a of each tooth 18 makes contact with the brim portion 32b of the adjacent tooth 18, it is possible to even further reduce the gap portion in the magnetic path U1 which is formed in the core 12 and the tooth 18, and to obtain a further greater magnetic field.

Since it is possible, with the tooth 18 which is made of metal, to ensure strength, it is possible to reduce the thickness of the insulator 20 which is made of resin and is attached to the tooth 18. Therefore, it is possible to reduce a thickness J (see Fig. 8) in the radial direction of the core, i.e., a combined thickness of the brim portions 32a, 32b, and the brim portions 48a (50b), 50a (48b) of the insulator 20 which cover the brim portions 32a, 32b in the case where the tooth 18 includes the brim portions 32a, 32b, as compared to a thickness in the radial direction of the core, of the brim portion of the insulator 20 in a case where the tooth 18 does not include the brim portions 32a, 32b, and only the insulator 20 is formed with brim portions (portions corresponding to the brim portions 32a, 32b of the tooth 18). As a result, it becomes possible to provide a sufficient range for winding the coil 22 around the tooth 18 which is provided with the brim portions 32a, 32b, to increase the number of windings of the coil 22 and therefore to obtain a large magnetic field.

Since the pin 16 is provided by a spring pin, it is possible to set a large tolerance for an inner diameter of the pin hole 40 in which the spring pin is to be pressed in than in cases where the pin is provided by a type other than the spring pin. This makes it possible to make manufacture at a low cost.

The stator 10 is utilized suitably in an outer rotor type rotating electric machine in which the rotor is disposed on an outer side than the teeth 18 in the radial direction of the core 12.

Next, description will cover a stator 100 according to another embodiment of the present invention.

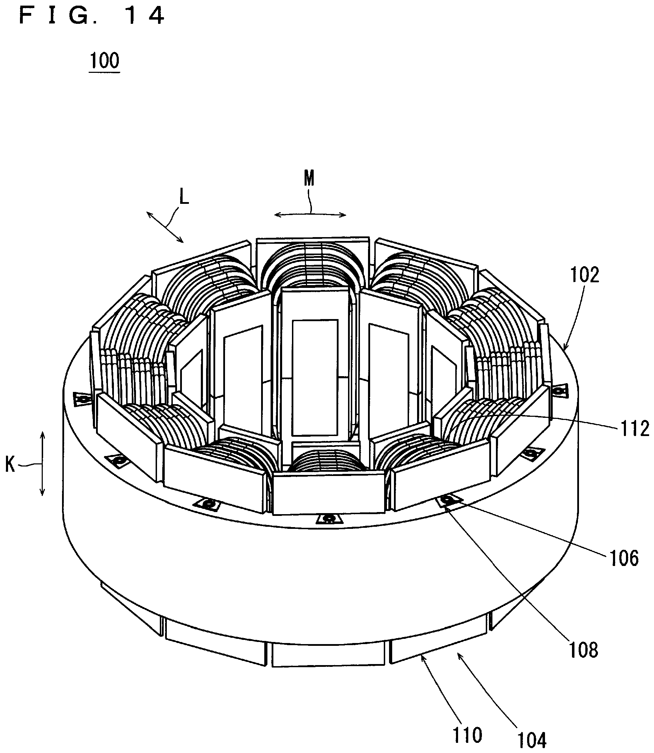

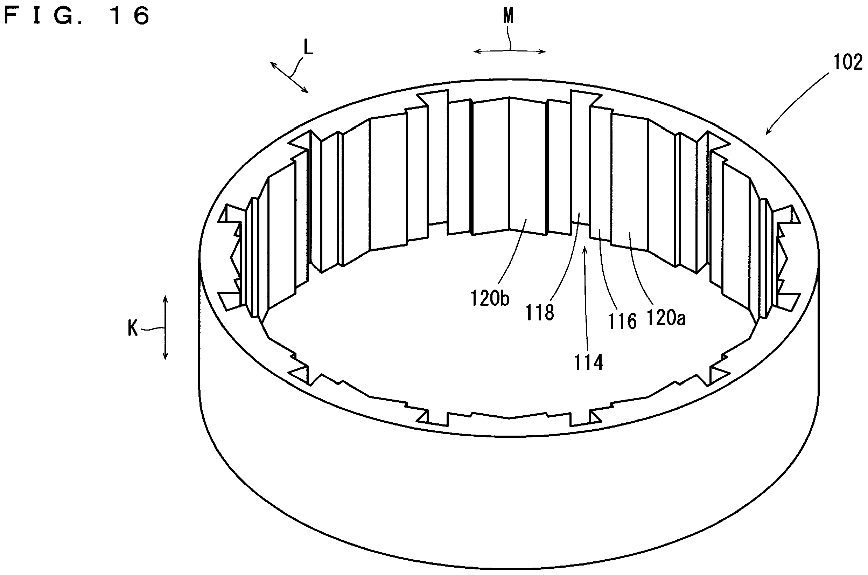

It should be noted here that the term axial direction of the core 102 as used in the embodiment of the present invention refers to a direction indicated by Arrow K in Fig. 14 and Fig. 16; the term radial direction of the core 102 refers to a direction indicated by Arrow L in Fig. 14 through Fig. 16; and the term circumferential direction of the core 102 refers to a direction indicated by Arrow M in Fig. 14 through Fig. 16.

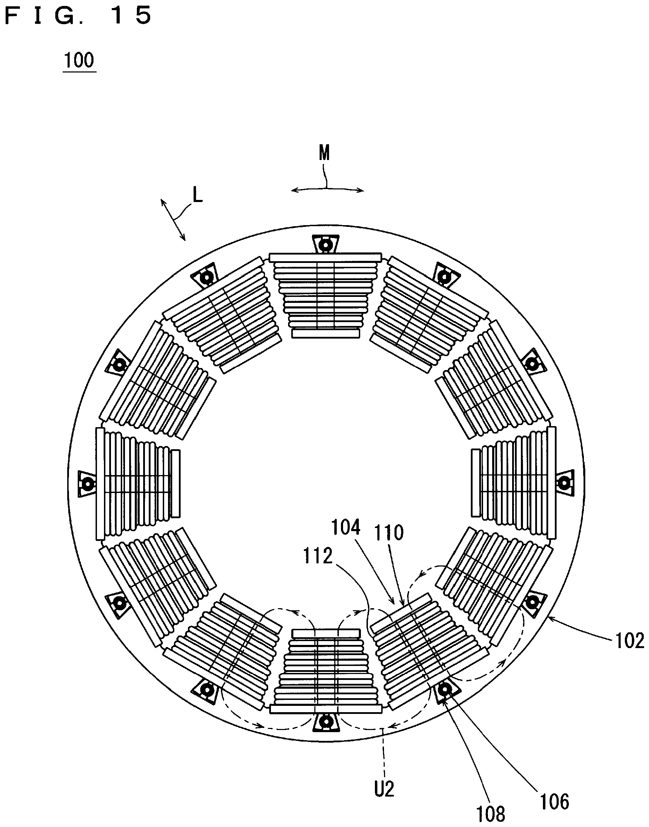

Referring to Fig. 14 and Fig. 15, a stator 100 includes a core 102, a plurality (twelve, in the present embodiment) of coil assemblies 104 and a plurality (twelve, in the present embodiment) of pins 106. The core 102 is cylindrical. The core 102 has an inner circumferential surface, to which the plurality of coil assemblies 104 are connected side by side, in a circumferential direction of the core 102. Each in the plurality of coil assemblies 104 which are connected to the core 102 is fixed to the core 102 by the pin 106. The coil assembly 104 includes a tooth 108, an insulator 110 and a coil 112. The coil 112 is wound around the tooth 108 with the insulator 110 in between.

Referring to Fig. 16, the core 102 includes a plurality (twelve, in the present embodiment) of connecting portions 114. The plurality of connecting portions 114 are formed in the inner circumferential surface of the core 102 next to each other in the circumferential direction of the core 102 for connecting each of the plurality of coil assemblies 104. The plurality of connecting portions 114 each include a recess 116, a recess 118 and seating surfaces 120a, 120b. The recess 116 recesses outward in a radial direction of the core 102, from the inner circumferential surface of the core 102. Also, the recess 116 extends in an axial direction of the core 102, from a first axial end portion of the core 102 through a second axial end portion thereof. Further, in a section perpendicular to the axial direction of the core 102, the recess 116 is formed in left-right symmetry with each other with respect to a centerline of the recess 118 which extends in the radial direction of the core 102. The recess 118 recesses outward in the radial direction of the core 102, from a center in the width direction (a direction perpendicular to the axial direction of the core 102 and to the radial direction of the core 102) of the recess 116 in a bottom surface of the recess 116. Also, the recess 118 extends in the axial direction of the core 102, from the first axial end portion of the core 102 through the second axial end portion thereof. Further, in a section perpendicular to the axial direction of the core 102, the recess 118 is left-right symmetrical with respect to a centerline of the recess 118 which extends in the radial direction of the core 102, and gradually widens outward in the radial direction of the core 102. The recess 116 and the recess 118 are formed like a groove extending in the axial direction of the core 102 in the inner circumferential surface of the core 102. The seating surfaces 120a, 120b extend in the axial direction of the core 102 in the inner circumferential surface of the core 102, along two ends of the recess 116 in the circumferential direction of the core 102. Also, in a section perpendicular to the axial direction of the core 102, the seating surfaces 120a, 120b are left-right symmetrical with respect to the centerline of the recess 116 which extends in the radial direction of the core 102 and perpendicular to the centerline. The core 102 described as the above is an equivalent of a cylindrical member having its inner section perpendicular to its axial direction formed into a equilateral dodecagon, each of its twelve inner side surfaces having its center formed with the recess 116 and the recess 118. Each of the inner side surfaces other than the recess 116 and the recess 118 is the seating surface 120a or 120b.

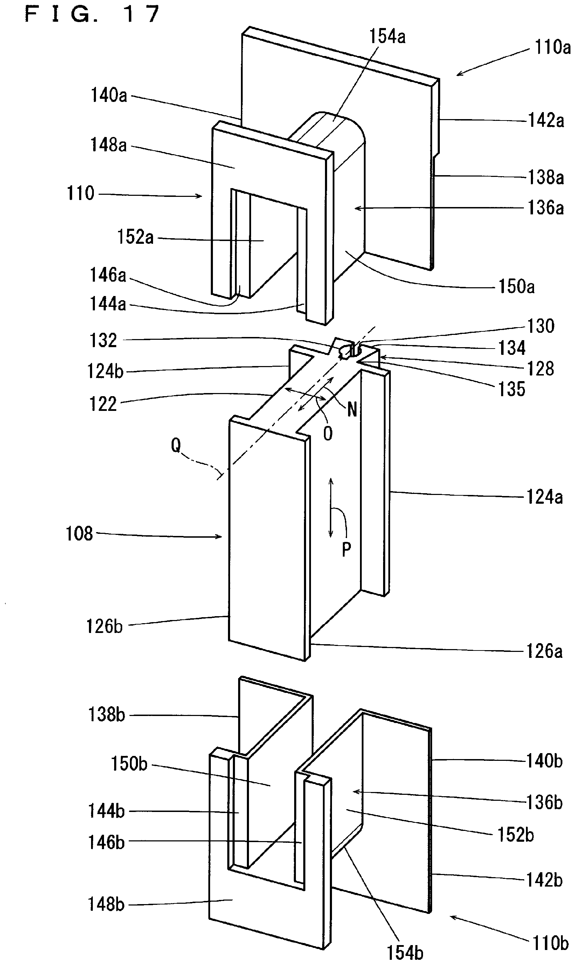

Referring to Fig. 17, the tooth 108 includes a tooth main body 122, brim portions 124a, 124b, brim portions 126a, 126b, a tongue 128, a slot 130 and a pin hole 132. Herein, the term longitudinal direction of the tooth main body 122 refers to a direction indicated by Arrow N in Fig. 17 through Fig. 22; the term lateral direction of the tooth main body 122 refers to a direction indicated by Arrow O in Fig. 17 through Fig. 22; and the term height direction of the tooth main body 122 refers to a direction indicated by Arrow P in Fig. 17 through Fig. 21. The tooth main body 122 (the tooth 108) has a dimension in a height direction, which is substantially equal to a dimension of the core 102 in the axial direction thereof.

The tooth main body 122 is formed like a rectangular plate.

At a first end portion in a longitudinal direction of the tooth main body 122, the brim portions 124a, 124b are formed to protrude both ways in a lateral direction of the tooth main body 122. The brim portions 124a, 124b extend in the height direction of the tooth main body 122, along the first longitudinal end portion of the tooth main body 122. Also, the brim portions 124a, 124b are formed in left-right symmetry with each other with respect to a centerline Q which passes through the center in the lateral direction of the tooth main body 122 and extends in the longitudinal direction of the tooth main body 122.

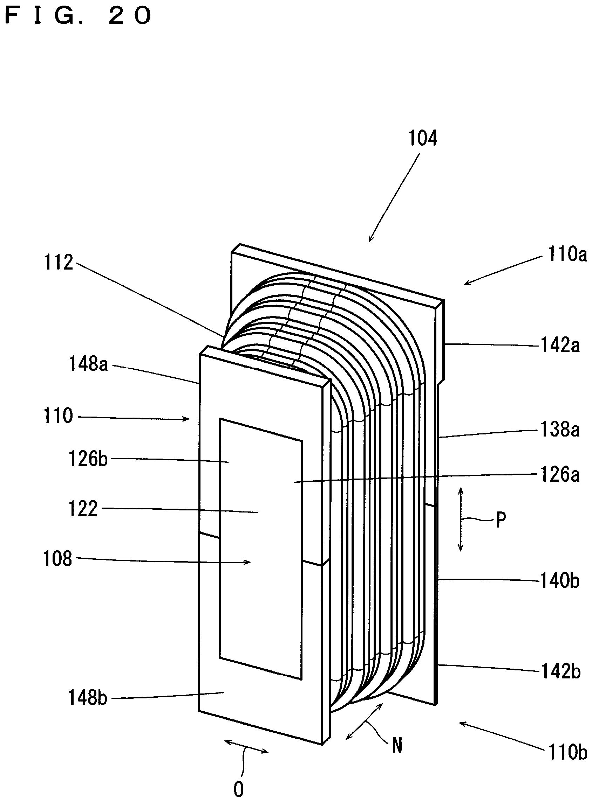

At a second end portion in the longitudinal direction of the tooth main body 122, the brim portions 126a, 126b are formed to protrude both ways in the lateral direction of the tooth main body 122. The brim portions 126a, 126b extend in the height direction of the tooth main body 122, along the second longitudinal end portion of the tooth main body 122. Also, the brim portions 126a, 126b are formed in left-right symmetry with each other with respect to the centerline Q. The brim portions 124a, 124b protrude by a greater amount than the brim portions 126a, 126b do. As will be described later, the coil 112 is wound around the tooth 108 with the insulator 110 in between, in four layers on the side closest to the brim portions 126a, 126b and in seven layers on the side closest to the brim portions 124a, 124b (see Fig. 20 through Fig. 22). Therefore, when the coil 112 is wound around the tooth 108 with the insulator 110 in between, the coil 112 is thicker on the side closer to the brim portions 124a, 124b than on the side closer to the brim portions 126a, 126b. For this reason, as has been described earlier, the brim portions 124a, 124b have their amount of protrusion larger than an amount of protrusion of the brim portions 126a, 126b, whereby it becomes possible to prevent more reliably the problem that the coil 112 comes off the tooth main body 122 in the longitudinal direction of the tooth main body 122.

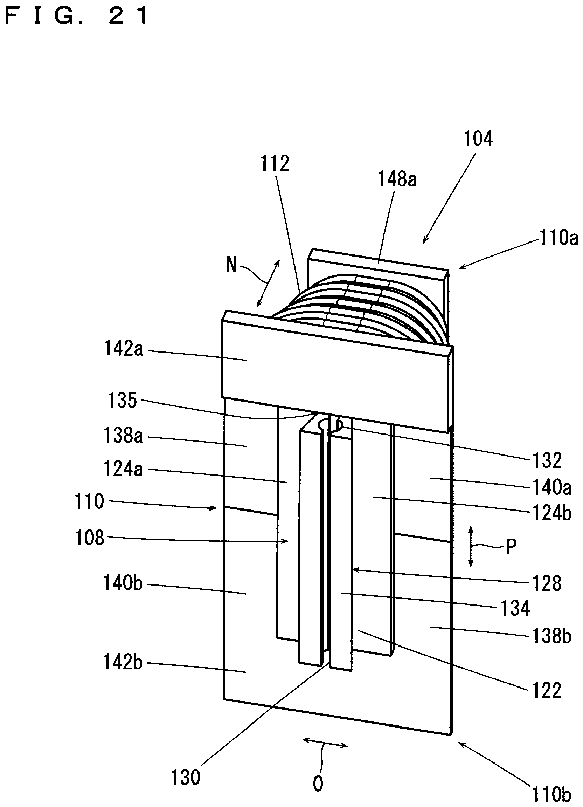

At the first end portion in the longitudinal direction of the tooth main body 122, the tongue 128 is formed to protrude in the longitudinal direction of the tooth main body 122 (see Fig. 21). The tongue 128 extends in the height direction of the tooth main body 122, along the first longitudinal end portion of the tooth main body 122. Also, the tongue 128 is left-right symmetrical with respect to the centerline Q, and gradually wider toward a tip portion 134 of the tongue 128.

The slot 130 extends in the longitudinal direction of the tooth main body 122, from a center of the tip portion 134 of the tongue 128 in the lateral direction of the tooth main body 122, to a base portion 135 of the tongue 128. In other words, the slot 130 is on the centerline Q. Also, the slot 130 is formed from a first end portion (first end surface) to a second end portion (second end surface) of the tongue 128 in the height direction of the tooth main body 122.

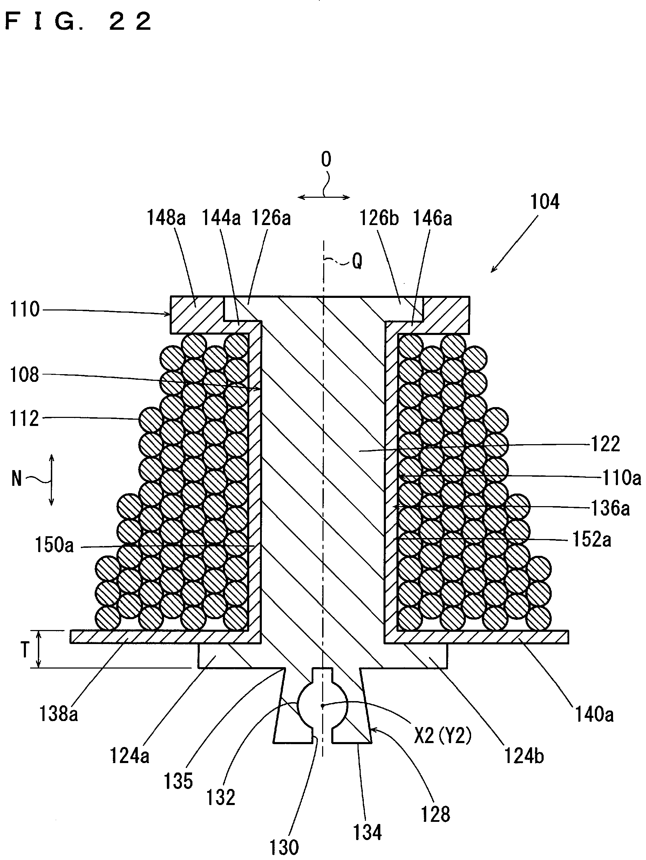

The pin hole 132 is circular in its section perpendicular to the height direction of the tooth main body 122, and penetrates the tongue 128 in the height direction of the tooth main body 122. Also, in the longitudinal direction of the tooth main body 122, a center X2 of the pin hole 132 is substantially identical with a center Y2 of the slot 130 (see Fig. 22). The center Y2 is a middle point from the two ends of the slot 130 in the longitudinal direction of the tooth main body 122.

The insulator 110 includes an upper member 110a and a lower member 110b. The upper member 110a includes an upper member main body 136a and brim portions 138a, 140a, 142a, 144a, 146a, 148a. Herein, a longitudinal direction, a lateral direction, and a height direction of the upper member main body 136a when the insulator 110 (the upper member 110a) is attached to the tooth 108 (the tooth main body 122) are identical with the longitudinal direction of the tooth main body 122 indicated by Arrow N, the lateral direction of the tooth main body 122 indicated by Arrow O, and the height direction of the tooth main body 122 indicated by Arrow P, respectively. The upper member main body 136a is formed to have a generally U-shaped section, and includes a pair of side portions 150a, 152a and a jointing portion 154a which joints the pair of side portions 150a, 152a to each other at their one end portion. The pair of side portions 150a, 152a are formed like thin plates. Also, the pair of side portions 150a, 152a are formed to face each other in the lateral direction of the upper member main body 136a. The jointing portion 154a is formed to extend in the longitudinal direction of the upper member main body 136a, and to have a generally semicircular section which is perpendicular to the longitudinal direction of the upper member main body 136a. The brim portion 138a, the brim portion 140a and the brim portion 142a are formed integrally with each other, to protrude from a first longitudinal end portion of the upper member main body 136a, outward of the upper member main body 136a. The brim portions 138a, 140a are each formed like a thin plate extending in the height direction of the upper member main body 136a, and protrude from the pair of side portions 150a, 152a in the lateral direction of the upper member main body 136a. The brim portion 142a is formed like a rectangular plate extending in the lateral direction of the upper member main body 136a, and protrudes from the jointing portion 154a and the brim portions 138a, 140a in the height direction of the upper member main body 136a. It should be noted here that in the longitudinal direction of the upper member main body 136a, the brim portion 142a is thicker than the brim portions 138a, 140a. The brim portion 144a, the brim portion 146a and the brim portion 148a are formed integrally with each other, to protrude from a second longitudinal end portion of the upper member main body 136a, outward of the upper member main body 136a. The brim portions 144a, 146a protrude out of the pair of side portions 150a, 152a in the lateral directions of the upper member main body 136a respectively. Also, the brim portions 144a, 146a extend in the height direction of the upper member main body 136a along the pair of side portions 150a, 152a respectively. The brim portion 148a is formed in a general shape of U when viewed from the longitudinal direction of the upper member main body 136a, and protrudes from the brim portions 144a, 146a and the jointing portion 154a, in the lateral direction and the height direction of the upper member main body 136a. It should be noted here that in the longitudinal direction of the upper member main body 136a, the brim portion 148a is thicker than the brim portions 144a, 146a. The lower member 110b is identical with the upper member 110a in its shape and dimension, except for the brim portion 142a in the upper member 110a. Therefore, excluding the brim portion 142a, the above description of the upper member 110a should be read, with the term "upper member" replaced with "lower member" and the letter "a" in each reference symbol replaced with the letter "b", whereby description of the lower member 110b is omitted. The lower member 110b does not include the brim portion 142a, but includes a brim portion 142b. In the longitudinal direction of the upper member main body 136a, if the brim portion 142a is given the same thickness as the brim portions 138a, 140a, then the brim portion 142b is obtained.

Referring to Fig. 17 through Fig. 19, description will be made for a method for attaching the insulator 110 to the tooth 108.

First, referring to Fig. 17, on both sides of the tooth main body 122 in its height direction, the upper member 110a and the lower member 110b are opposed to each other. In this state, the brim portions 138a, 140a, 142a of the upper member 110a are on a side where there are the brim portions 124a, 124b of the tooth 108, whereas the brim portions 144a, 146a, 148a of the upper member 110a are on a side where there are the brim portions 126a, 126b of the tooth 108. Also, the brim portions 138b, 140b, 142b of the lower member 110b are on the side where there are the brim portions 124a, 124b of the tooth 108, whereas the brim portions 144b, 146b, 148b of the lower member 110b are on the side where there are the brim portions 126a, 126b of the tooth 108.

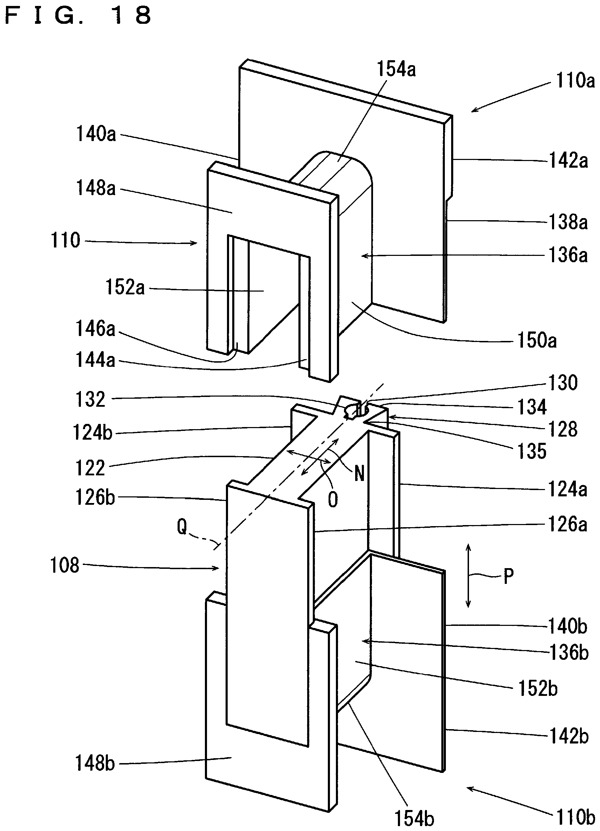

Next, referring to Fig. 18, the lower member 110b is moved toward the tooth main body 122, fitting the tooth main body 122 between the pair of side portions 150b, 152b, whereby the lower member 110b is attached to the tooth main body 122.

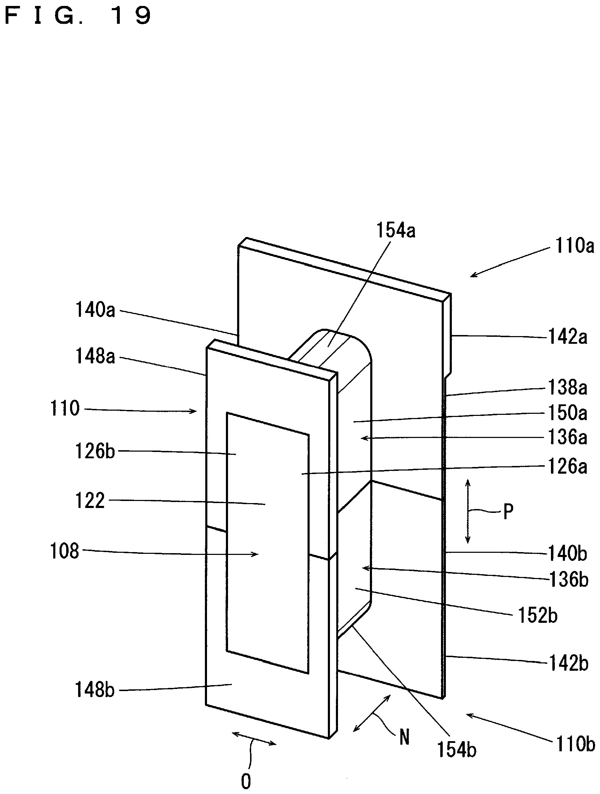

Then, referring to Fig. 19, the upper member 110a is moved toward the tooth main body 122, fitting the tooth main body 122 between the pair of side portions 150a, 152a, whereby the upper member 110a is attached to the tooth main body 122. In this way, the insulator 110 is attached to the tooth 108. Under the state that the insulator 110 is attached to the tooth 108, the tooth main body 122 is covered by the upper member main body 136a and the lower member main body 136b. Also, in the longitudinal direction of the tooth main body 122, the brim portion 124a of the tooth 108 is overlapped by the brim portions 138a, 140b of the insulator 110, and the brim portion 124b of the tooth 108 is overlapped by the brim portions 140a, 138b of the insulator 110. Further, in the longitudinal direction of the tooth main body 122, the brim portion 126a of the tooth 108 is overlapped by the brim portions 144a, 146b of the insulator 110, and the brim portion 126b of the tooth 108 is overlapped by the brim portions 146a, 144b of the insulator 110. Therefore, when the coil 112 is wound around the tooth main body 122, as will be described later, under the state that the insulator 110 is attached to the tooth 108, there is no contact between the tooth main body 122 and the coil 112 since there are the upper member main body 136a and the lower member main body 136b between the tooth main body 122 and the coil 112. Also, there are the brim portions 138a, 140b of the insulator 110 between the brim portion 124a of the tooth 108 and the coil 112, whereas there are the brim portions 140a, 138b of the insulator 110 between the brim portion 124b of the tooth 108 and the coil 112, so there is no contact between the brim portions 124a, 124b and the coil 112. Further, there are the brim portions 144a, 146b of the insulator 110 between the brim portion 126a of the tooth 108 and the coil 112, whereas there are the brim portions 146a, 144b of the insulator 110 between the brim portion 126b of the tooth 108 and the coil 112, so there is no contact between the brim portions 126a, 126b and the coil 112. As understood, by attaching the insulator 110 to the tooth 108, it is possible to prevent contact between the tooth 108 and the coil 112.

Referring to Fig. 19 through Fig. 22, the coil 112 is wound around the tooth 108 with the insulator 110 in between. Fig. 22 is a sectional view showing a section which is perpendicular to the height direction of the tooth main body 122 in Fig. 20 and Fig. 21. The coil 112 is wound around outer surfaces of the upper member main body 136a of the upper member 110a and of the lower member main body 136b of the lower member 110b in the insulator 110. Also, on the outer surfaces of the upper member main body 136a and of the lower member main body 136b, the coil 112 is wound between the brim portions 138a, 140a, 142a, 138b, 140b, 142b and the brim portions 144a, 146a, 148a, 144b, 146b, 148b. The coil 112 is wound in four layers on a side closest to the brim portions 144a, 146a, 148a, 144b, 146b, 148b, and then wound sequentially in five layers, six layers and then seven layers toward a side closer to the brim portions 138a, 140a, 142a, 138b, 140b, 142b. By winding the coil 112 around the tooth 108 with the insulator 110 in between, the coil assembly 104 is obtained. Also, the tooth 108 and the insulator 110 may be made of various materials. For instance, the tooth 108 is made of a metal, whereas the insulator 110 is made of a resin.

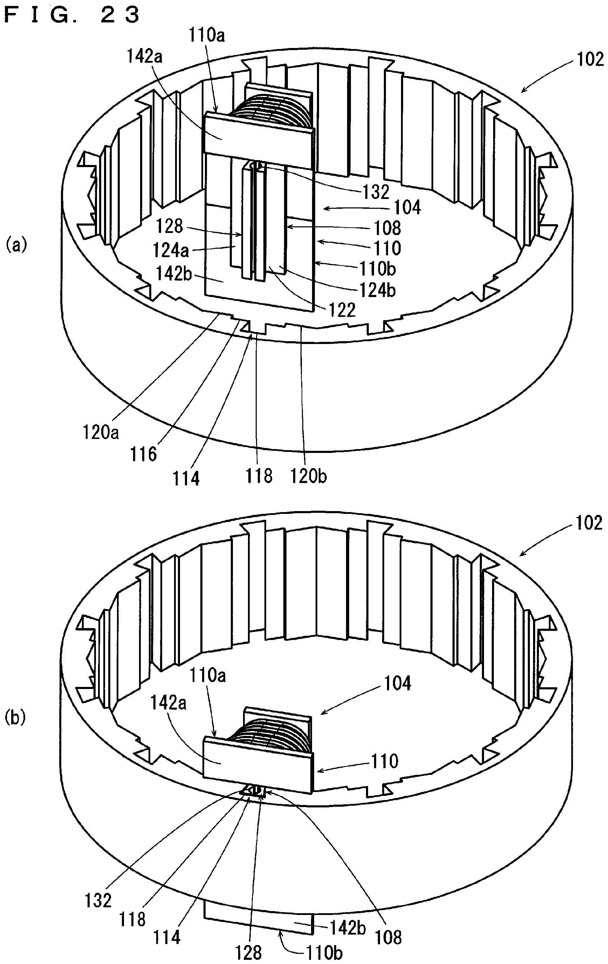

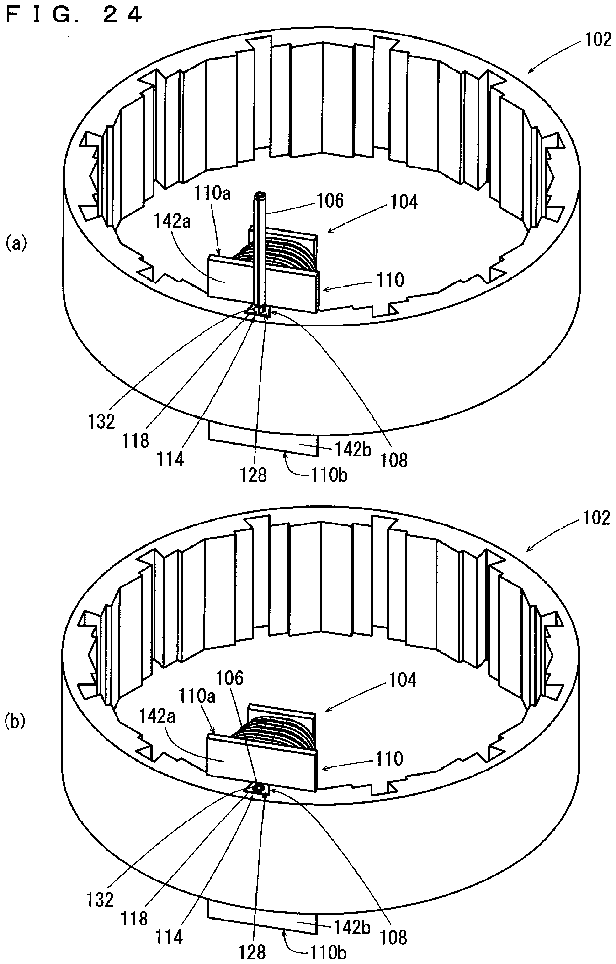

Referring to Fig. 23 and Fig. 24, description will be made for a method for fixing the coil assembly 104 to the core 102.

Referring to Fig. 23(a) first, with the brim portion 142b of the insulator 110 pointing toward the core 102, the core 102 and the coil assembly 104 are brought to predetermined positions, in alignment with each other in the axial direction of the core 102. In this step, it is desirable that the height direction and the longitudinal direction of the tooth main body 122 are in alignment with the axial direction and the radial direction of the core 102 respectively. Then, the coil assembly 104 is moved in the axial direction of the core 102 to fit the tongue 128 into the recess 118. In this step, the recess 116 is fitted by the brim portions 124a, 124b and the tooth main body 122.

Referring to Fig. 23(b), the coil assembly 104 is moved in the axial direction of the core 102 until the brim portion 142a of the insulator 110 comes in contact with the core 102. In this step, two end portions of the core 102 in the axial direction of the core 102 and two end portions of the tooth 108 in the height direction of the tooth main body 122 come in substantial alignment. As understood, the coil assembly 104 (the tooth 108) is connected to the inner circumferential surface of the core 102, to extend beyond the core 102, inward in the radial direction of the core 102.

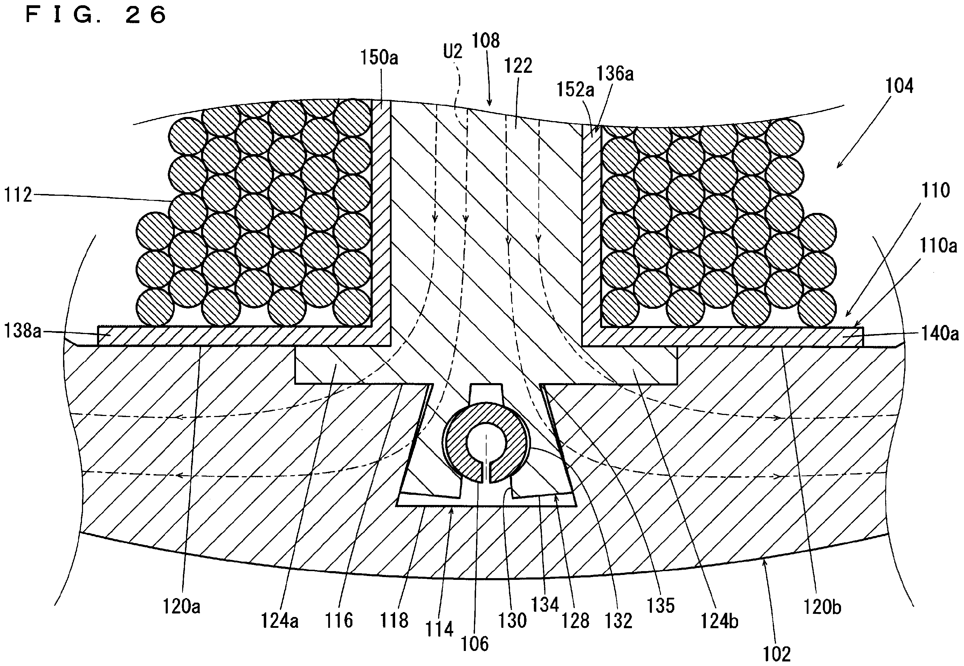

Referring to Fig. 24(a), the pin 106 may be selected from many kinds of pins known publicly. In the present embodiment, the pin 106 is provided by a spring pin which has a generally C-shaped section (see Fig. 26). The pin 106 has a diameter, which is slightly larger than that of the pin hole 132. However, the pin 106 has its two end portions tapered so that their diameters are slightly smaller than that of the pin hole 132. This makes it easy to press the pin 106 into the pin hole 132. Also, the pin 106 has a length which is generally equal to the dimension of the core 102 in the axial direction of the core 102 and the dimension of the tooth 108 in the height direction of the tooth main body 122. The pin 106 is formed so that it is capable of being pressed into the pin hole 132 under the condition that the recess 118 and the tongue 128 are fitted with each other. The pin 106 as has been described is held in alignment with the pin hole 132, in the axial direction of the core 102. Then, the pin 106 is moved in the axial direction of the core 102 to press into the pin hole 132. While details will be described later, as the pin 106 is pressed into the pin hole 132, the tongue 128 is pressed outward by the pin 106, and the tongue 128 opens in the lateral direction of the tooth main body 122. As it opens in the lateral direction of the tooth main body 122, the tongue 128 presses side surfaces of the recess 118.

Finally, referring to Fig. 24(b), the pin 106 is pressed into the pin hole 132 to a position where both end portions of the tooth 108 are generally flush with corresponding end portions of the pin 106 in the axial direction of the core 102. Under this state, the tongue 128 presses the side surfaces of the recess 118 entirely, thereby fixing the coil assembly 104 (the tooth 108) to the core 102. Under the state where the coil assembly 104 is fixed to the core 102, the axial direction and the radial direction of the core 102 become identical with the height direction and the longitudinal direction of the tooth main body 122.

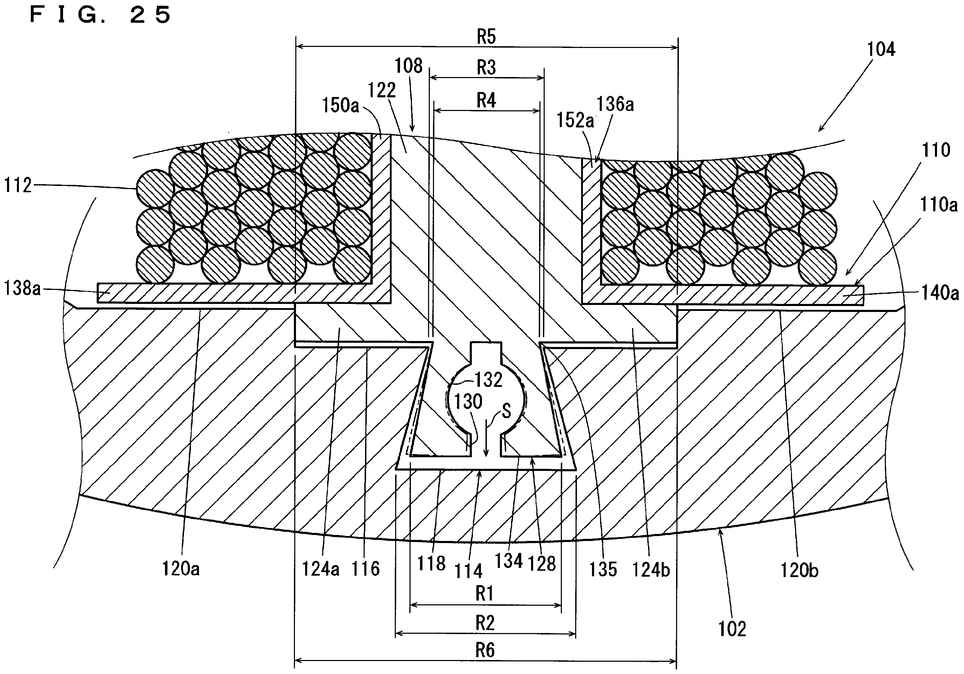

Fig. 25 is a sectional view taken perpendicularly to the axial direction of the core 102 shown in Fig. 23(b). Fig. 26 is a sectional view taken perpendicularly to the axial direction of the core 102 shown in Fig. 24(b). Referring to Fig. 25 and Fig. 26, detailed description will be made for a behavior of the tongue 128 when the coil assembly 104 is fixed to the core 102.

Referring to Fig. 25, description will be made for a state where the coil assembly 104 has been connected to the core 102, the axial direction of the core 102 and the height direction of the tooth main body 122 are identical with each other, and the radial direction of the core 102 and the longitudinal direction of the tooth main body 122 are identical with each other. In this state, the recess 118 is open on its side facing the tooth 108, and is gradually wider in the radial direction of the core 102, from the tooth 108 outward of the core 102, whereas the tongue 128 protrudes from a core-102-side end portion of the tooth main body 122, outward of the core 102, with a gradually increasing width. Also, the brim portions 124a, 124b protrude from the core-102-side end portion of the tooth main body 122, in directions which are perpendicular to the axial direction of the core 102 and to the radial direction of the core 102 (i.e., protrude in the lateral direction of the tooth main body 122), beyond the core-102-side end portion of the tooth main body 122. The slot 130 is formed so that it extends in the radial direction of the core 102 from a tip portion 134 of the tongue 128, and from a first end portion (first end face) of the tongue 128 in the axial direction of the core 102 through a second end portion (second end face) thereof. The pin hole 132 penetrates the tongue 128 in the axial direction of the core 102.

In the lateral direction of the tooth main body 122, the tip portion 134 of the tongue 128 has a width R1, which is smaller than a width R2 of a bottom surface portion of the recess 118. Also, in the lateral direction of the tooth main body 122, the width R1 of the tip portion 134 of the tongue 128 is greater than a width R3 of an opening of the recess 118 in the inner circumferential surface of the core 102. In the lateral direction of the tooth main body 122, the base portion 135 of the tongue 128 has a width R4, which is smaller than the width R3 of the opening of the recess 118. Further, in the lateral direction of the tooth main body 122, a width R5 from a tip surface of the brim portion 124a to a tip surface of the brim portion 124b is substantially the same as a width R6 of the recess 116. The recess 118 and the tongue 128 are designed so that a gap between their side surfaces is greater on a side closer to the tip portion 134 of the tongue 128 than on a side closer to the base portion 135 of the tongue 128. By forming the recess 116, the recess 118, the brim portions 124a, 124b, and the tongue 128 as described, it is possible to connect the core 102 and the coil assembly 104 with each other movably in the axial direction of the core 102. Also, in the lateral direction of the tooth main body 122, the width R1 of the tip portion 134 of the tongue 128 is greater than the width R3 of the opening of the recess 118, whereby it is possible, even if the pin 106 is not pressed into the pin hole 132, to prevent the coil assembly 104 from dislocating inward in the radial direction of the core 102. Since the slot 130 is open on the tip-portion-134 side of the tongue 128, as the pin 106 is pressed into the pin hole 132, the tongue 128 is opened, as indicated by an alternate long and two dashes line, in the lateral direction of the tooth main body 122, on a fulcrum which is near an end portion of the slot 130 in the base portion 135. As the tongue 128 opens in the lateral direction of the tooth main body 122, the tongue 128 makes contact with side surfaces of the recess 118 and then the tongue 128 presses the side surfaces of the recess 118. Since the recess 118 and the tongue 128 are gradually wider outward in the radial direction of the core 102, when the side surfaces of the recess 118 are pressed by the tongue 128 as described above, a force S which works outward in the radial direction of the core 102 is applied onto the tongue 128. Thus, the tongue 128 moves outward in the radial direction of the core 102 along the side surfaces of the recess 118.

Referring to Fig. 26 next, as the tongue 128 moves outward in the radial direction of the core 102, the coil assembly 104 itself also moves outward in the radial direction of the core 102. In other words, the tooth main body 122 and the brim portions 124a, 124b also move outward in the radial direction of the core 102. This brings the tooth main body 122 and the brim portions 124a, 124b into contact with the bottom surface of the recess 116. Thereafter, the tongue 128 continues to press the side surfaces of the recess 118. This causes the tooth main body 122 and the brim portions 124a, 124b to press the recess 116, and into firm contact with the recess 116. As understood, the tongue 128 presses the side surfaces of the recess 118, bringing the tooth main body 122 and the brim portions 124a, 124b into firm contact with the recess 116, whereby the coil assembly 104 is fixed to the core 102. As has been described earlier, the width R5 from the tip surface of the brim portion 124a to the tip surface of the brim portion 124b is substantially equal to the width R6 of the recess 116, and therefore, it is possible to reduce a gap portion in a magnetic path U2 (see Fig. 15 and Fig. 26), which is formed in the core 102 and the tooth 108 when the rotor of the rotating electric machine rotates with respect to the stator 100, and thus to obtain a greater magnetic field. Also, in the longitudinal direction of the tooth main body 122, the brim portions 124a, 124b have a dimension (thickness) equal to the dimension (depth) of the recess 116. This makes it possible to fill a gap between the core 102 and the brim portions 138a, 140a, 138b, 140b of the insulator 110. This makes it possible to reduce the gap portion in the magnetic path U2 which is formed in the core 102 and the tooth 108, and to obtain a greater magnetic field.

The core 102 with each of its plurality of connecting portions 114 having the coil assembly 104 fixed is the stator 100.

According to the stator 100 for a rotating electric machine as described, it is possible, since the tooth 108 has the brim portions 124a, 124b, to prevent the coil 112 which is wound around the tooth main body 122 from moving beyond the brim portions 124a, 124b toward the core 102. In other words, it is possible to prevent the coil 112 from shifting beyond the brim portions 124a, 124b toward the core 102. The arrangement makes sure that when the recess 118 of the core 102 and the tongue 128 of the tooth 108 are fitted to each other, the core 102 and the coil 112 do not interfere with each other, making it possible to fit the recess 118 of the core 102 and the tongue 128 of the tooth 108 with each other easily, thereby making it easy to assemble the core 102 and the tooth 108 (coil assembly 104) . Also, as the pin 106 is pressed into the pin hole 132 under the state that the recess 118 and the tongue 128 are fitted to each other, the tongue 128 opens in the direction which is perpendicular to the axial direction of the core 102 and to the radial direction of the core 102, thereby making contact with the side surfaces of the recess 118 and then pressing the side surfaces of the recess 118. Since the recess 118 and the tongue 128 are formed to be gradually wider from the tooth 108 toward the core 102, pressing the side surfaces of the recess 118 by the tongue 128 causes the tooth 108 to move toward the core 102 in the radial direction of the core 102, bringing the core 102 and the brim portions 124a, 124b of the tooth 108 into firm contact, thereby fixing the tooth 108 to the core 102. Therefore, by forming the brim portions 124a, 124b at the core-102-side end portion of the tooth main body 122, it becomes possible to reduce the gap portion in the magnetic path U2 formed in the core 102 and the tooth 108 when the rotor of the rotating electric machine makes rotation with respect to the stator 100, and therefore to obtain a greater magnetic field.

By pressing the pin 106 into the pin hole 132 under the state that the recess 118 and the tongue 128 are fitted to each other, it is possible to open the tongue 128 as a whole, from the pin hole 132 through the tip portion 134 of the tongue 128 in directions which are perpendicular to the axial direction of the core 102 and to the radial direction of the core 102. In this step, the tongue 128 opens on the fulcrum which is near the end portion of the slot 130 in the base portion 135. Therefore, the tongue 128 moves by a greater amount on a side near the tip portion 134 than on a side near the base portion 135. In such a case, designing the gap between the side surface of the recess 118 and the side surface of the tongue 128 so that the gap on the side near the tip portion 134 of the tongue 128 is greater than the gap on the side near the base portion 135 makes more uniform contact between the recess 118 and the tongue 128, entirely from the base portion 135 to the tip portion 134 of the tongue 128 when the tongue 128 opens. With this arrangement, it is possible to further reduce the gap portion in the magnetic path U2 which is formed in the core 102 and the tooth 108, and to obtain a greater magnetic field.

Since it is possible, with the tooth 108 which is made of metal, to ensure strength, it is possible to reduce a thickness of the insulator 110 which is made of resin and attached to the tooth 108. Therefore, it is possible to reduce a thickness T (see Fig. 22) in the radial direction of the core, as a combined thickness of the brim portions 124a, 124b, and the brim portions 138a (140b), 140a (138b) of the insulator 110 which cover the brim portions 124a, 124b in the case where the tooth 108 includes the brim portions 124a, 124b than a thickness in the radial direction of the core, of the brim portion of the insulator 110 in a case where the tooth 108 does not include the brim portions 124a, 124b, and only the insulator 110 is formed with brim portions (portions corresponding to the brim portions 124a, 124b of the tooth 108). As a result, it becomes possible to provide a sufficient range for winding the coil 112 around the tooth 108 which is provided with the brim portions 124a, 124b, to increase the number of windings of the coil 112 and therefore to obtain a large magnetic field.

Since the pin 106 is provided by a spring pin, it is possible to set a large tolerance for an inner diameter of the pin hole 132 in which the spring pin is to be pressed in than in cases where the pin is provided by a type other than the spring pin. This makes it possible to make manufacture at a low cost.

The stator 100 is utilized suitably in an inner rotor type rotating electric machine in which the rotor is disposed on an inner side than the teeth 108 in the radial direction of the core 102.

In the embodiments described above, description was made for cases where the cores 12, 102 are cylindrical. However, the cores 12, 102 should at least be annular.

In the embodiments described above, description was made for cases where the pin holes 40, 132 have a circular section. However, this is not limiting. The pin holes 40, 132 may have a triangular section or a rectangular section for example.

In the embodiment described above, description was made for cases where the recess 26 and the tongue 36 are formed to be gradually wider in a linearly manner. However, this is not limiting. At least one of the recess 26 and the tongue 36 may be formed to become gradually wider in a curved manner or to become wider in a stepped manner. The same applies to the recess 118 and the tongue 128.

In the embodiment described above, description was made for cases where the slot 130 extends from the center of the tip portion 134 of the tongue 128 to the base portion 135 of the tongue 128. However, this is not limiting. The slot 130 may extend to part of the tooth main body 122. Preferably, the slot 130 is formed not to extend beyond the brim portions 124a, 124b, toward the second end portion in the longitudinal direction of the tooth main body 122.

In the embodiment described above, description was made for a case where the center X2 of the pin hole 132 is substantially identical with the center Y2 of the slot 130. However, this is not limiting. The center X2 of the pin hole 132 may be closer to the tooth main body 122 than the center Y2 of the slot 130 is in the longitudinal direction of the tooth main body 122.

The present invention being thus far described in terms of preferred embodiments, it is obvious that these may be varied in many ways, provided that these variations are within the scope of the present invention, which is defined by the accompanied claims.

### REFERENCE SIGNS LIST

10, 100 Stators
12, 102 Cores
14, 104 Coil assemblies
16, 106 Pins
18, 108 Teeth
20, 110 Insulators
22, 112 Coils
26, 116, 118 Recesses
28a, 28b, 120a, 120b Seating surfaces
30, 122 Tooth main bodies
32a, 32b, 34a, 34b, 48a, 48b, 50a, 50b, 52a, 52b, 54a, 54b, 56a, 56b, 58a, 58b, 124a, 124b, 126a, 126b, 138a, 138b, 140a, 140b, 142a, 142b, 144a, 144b, 146a, 146b, 148a, 148b Brim portions
36, 128 Tongues
38, 130 Slots
40, 132 Pin holes

## Claims

1. A stator (10, 100) for a rotating electric machine, comprising:
an annular core (12, 102);
a tooth (18, 108) extending in a radial direction of the core (12, 102) and connected to the core (12, 102);
a coil (22, 112) wound around the tooth (18, 108); and
a pin (16, 106) for fixing the tooth (18, 108) to the core (12, 102); wherein
the core (12, 102) includes a first recess (26, 118) opening toward the tooth (18, 108) and gradually widening from the tooth (18, 108) toward the core (12, 102) in the radial direction of the core (12, 102),
the tooth (18, 108) includes a tooth main body (30, 122) around which the coil (22, 112) is wound; a tongue (36, 128) protruding from a core-side end portion of the tooth main body (30, 122) toward the core (12, 102), with a gradually increasing width, and fittable into the first recess (26, 118); a slot (38, 130) extending from a tip portion (44, 134) of the tongue (36, 128) in the radial direction of the core (12, 102), being formed from a first end portion of the tongue (36, 128) in an axial direction of the core (12, 102) to a second end portion of the tongue(36, 128); and a pin hole (40, 132) formed in the slot (38, 130) and penetrating the tongue (36, 128) in the axial direction of the core (12, 102);
the pin (16, 106) is capable of being pressed into the pin hole (40, 132) under a state where the first recess (26, 118) and the tongue (36, 128) are fitted to each other; and
the tooth (18, 108) further includes a brim portion (32a, 32b, 124a, 124b) protruding from the core-side end portion of the tooth main body (30, 122) in a direction perpendicular to the axial direction of the core (12, 102) and to the radial direction of the core (12, 102), beyond the core-side end portion of the tooth main body (30, 122); and wherein
the tongue (36, 128) is configured to widen in directions which are perpendicular to the axial direction of the core (12, 102) and to the radial direction of the core (12, 102) and press the first recess (26, 118) when the pin (16, 106) is pressed into the pin hole (40, 132) under the state where the first recess (26, 118) and the tongue (36, 128) are fitted to each other, making uniform contact between the recess (26, 118) and the tongue (36, 128), entirely from a base portion (45, 135) of the tongue (36, 128) to the tip portion (44, 134) of the tongue (36, 128) and bringing the core (12, 102) and the brim portion (32a, 32b, 124a, 124b) of the tooth (18, 108) into firm contact, thereby fixing the tooth (18, 108) to the core (12, 102); wherein
the stator (10, 100) further comprises:
an insulator (20, 110) attached to the tooth (18, 108); wherein
the coil (22, 112) is wound around the tooth (18, 108), with the insulator (20, 110) in between;
under a state where the first recess (26, 118) and the tongue (36, 128) are fitted to each other and before the pin (16, 106) is pressed into the pin hole (40, 132), there is a greater gap between a side surface of the first recess (26, 118) and a side surface of the tongue (36, 128) in a circumferential direction of the core (12, 102) on a side closer to the tip portion (44, 134) of the tongue (36, 128) than on a side closer to the base portion (45, 135) of the tongue (36, 128).

2. The stator (10) for a rotating electric machine according to Claim 1, wherein
the slot (38) extends from the tip portion (44, 134) of the tongue (36) to part of the tooth main body (30) in the radial direction of the core (12), and
the pin hole's (40) center in the radial direction of the core (12) is closer to the tooth main body (30) than a center of the slot (38) in the radial direction of the core (12) is.

3. The stator (10) for a rotating electric machine according to Claim 1 or 2, wherein at least part of the pin hole (40) is formed in the tooth main body (30).

4. The stator (10) for a rotating electric machine according to one of Claims 1 through 3, wherein a plurality of the teeth (18) are disposed in the circumferential direction of the core (12), and mutually adjacent two of the teeth (18) have their brim portions (32a, 32b) in contact with each other.

5. The stator (10, 100) for a rotating electric machine according to one of Claims 1 through 4, wherein the tooth (18, 108) is made of a metal, and the insulator (20, 110) is made of a resin.

6. The stator (10, 100) for a rotating electric machine according to one of Claims 1 through 5, wherein the pin (16, 106) is provided by a spring pin.

7. The stator (10) for a rotating electric machine according to one of Claims 1 through 6, wherein the tooth (18) extends more outward than the core (12) in the radial direction of the core (12).

8. The stator (100) for a rotating electric machine according to one of Claims 1 through 6, wherein the tooth (108) extends more inward than the core (102) in the radial direction of the core (102).

9. The stator (100) for a rotating electric machine according to Claim 8, wherein
the core (102) further includes a second recess (116) opening toward the tooth (108) and recessing outward in the radial direction of the core (102),
the first recess (118) recesses outward in the radial direction of the core (102) from a bottom surface of the second recess (116), and
the tooth main body (122) and the brim portion (124a, 124b) are configured to come into contact with the bottom surface of the second recess (116) when the pin (106) is pressed into the pin hole (132).

## Patentansprüche

1. Ein Stator (10, 100) für eine rotierende elektrische Maschine, umfassend:
einen ringförmigen Kern (12, 102);
einen Zahn (18, 108), der sich in einer radialen Richtung des Kerns (12, 102) erstreckt und mit dem Kern (12, 102) verbunden ist;
eine Spule (22, 112), die um den Zahn (18, 108) gewunden ist; und
ein Stift (16, 106) zum Befestigen des Zahns (18, 108) an den Kern (12, 102); wobei der Kern (12, 102) eine erste Ausnehmung (26, 118) beinhaltet, die sich zu dem Zahn (18, 108) öffnet und sich graduell von dem Zahn (18, 108) zu dem Kern (12, 102) in der radialen Richtung des Kerns (12, 102) weitet,
der Zahn (18, 108) einen Zahnhauptkörper (30, 122), um den die Spule (22, 112) gewunden ist; eine Zunge (36, 128), die von einem kernseitigen Endabschnitt des Zahnhauptkörpers (30, 122) zu dem Kern (12, 102) mit einer graduell zunehmenden Breite vorsteht, und in die erste Ausnehmung (26, 118) einpassbar ist; einen Schlitz (38, 130), der sich von einem Spitzenabschnitt (44, 134) der Zunge (36, 128) in der radialen Richtung des Kerns (12, 102) erstreckt, wobei er von einem ersten Endabschnitt der Zunge (36, 128) in einer axialen Richtung des Kerns (12, 102) zu einem zweiten Endabschnitt der Zunge (36, 128) ausgebildet ist; und ein Stiftloch (40, 132) beinhaltet, das in dem Schlitz (38, 130) ausgebildet ist und die Zunge (36, 128) in der axialen Richtung des Kerns (12, 102) durchdringt;
der Stift (16, 106) in das Stiftloch (40, 132) unter einem Zustand, in dem die erste Ausnehmung (26, 118) und die Zunge (36, 128) aneinander gepasst sind, eingepresst werden kann; und der Zahn (18, 108) weiterhin einen Krempenabschnitt (32a, 32b, 124a, 124b), der von dem kernseitigen Endabschnitt des Zahnhauptkörpers (30, 122) in einer Richtung senkrecht zu der axialen Richtung des Kerns (12, 102) und zu der radialen Richtung des Kerns (12, 102) über den kernseitigen Endabschnitt des Zahnhauptkörpers (30, 122) hinaus vorsteht beinhaltet; und wobei
die Zunge (36, 128) konfiguriert ist, sich in Richtungen, die senkrecht zu der axialen Richtung des Kerns (12, 102) und zu der radialen Richtung des Kerns (12, 102) sind, zu weiten und die erste Ausnehmung (26, 118) zu pressen, wenn der Stift (16, 106) in das Stiftloch (40, 132) unter dem Zustand, in dem die erste Ausnehmung (26, 118) und die Zunge (36, 128) aneinander gepasst sind, gepresst wird, wobei dabei einheitlicher Kontakt zwischen der Ausnehmung (26, 118) und der Zunge (36, 128) gesamtheitlich von einem Basisabschnitt (45, 135) der Zunge (36, 128) zu dem Spitzenabschnitt (44, 134) der Zunge (36, 128) gemacht wird und der Kern (12, 102) und der Krempenabschnitt (32a, 32b, 124a, 124b) des Zahns (18, 108) in festen Kontakt gebracht werden und dabei der Zahn (18, 108) an den Kern (12, 102) befestigt wird; wobei
der Stator (10, 100) weiterhin umfasst:
einen Isolator (20, 110), der an dem Zahn (18, 108) angebracht ist; wobei
die Spule (22, 112) um den Zahn (18, 108) mit dem Isolator (20, 110) dazwischen gewunden ist;
unter einem Zustand, in dem die erste Ausnehmung (26, 118) und die Zunge (36, 128) aneinander gepasst sind und bevor der Stift (16, 106) in das Stiftloch (40, 132) gepresst ist, es einen größeren Spalt zwischen einer Seitenfläche der ersten Ausnehmung (26, 118) und einer Seitenfläche der Zunge (36, 128) in einer Umfangsrichtung des Kerns (12, 102) auf einer Seite näher zu dem Spitzenabschnitt (44, 134) der Zunge (36, 128) als auf einer Seite näher zu dem Basisabschnitt (45, 135) der Zunge (36, 128) gibt.

2. Der Stator (10) für eine rotierende elektrische Maschine nach Anspruch 1, wobei der sich der Schlitz (38) von dem Spitzenabschnitt (44, 134) der Zunge (36) zu einem Teil des Zahnhauptkörpers (30) in der radialen Richtung des Kerns (12) erstreckt, und
sich die Mitte des Stiftlochs (40) in der radialen Richtung des Kerns (12) näher zu dem Zahnhauptkörper (30) als eine Mitte des Schlitzes (38) in der radialen Richtung des Kerns (12) befindet.

3. Der Stator (10) für eine rotierende elektrische Maschine nach Anspruch 1 oder 2, wobei zumindest ein Teil des Stiftlochs (40) in dem Zahnhauptkörper (30) ausgebildet ist.

4. Der Stator (10) für eine rotierende elektrische Maschine nach irgendeinem der Ansprüche 1 bis 3, wobei eine Vielzahl von Zähnen (18) in der Umfangsrichtung des Kerns (12) angeordnet sind, und gegenseitig benachbarte zwei der Zähne (18) ihre Krempenabschnitte (32a, 32b) in Kontakt miteinander haben.

5. Der Stator (10, 100) für eine rotierende elektrische Maschine nach irgendeinem der Ansprüche 1 bis 4, wobei der Zahn (18, 108) aus einem Metall gemacht ist und der Isolator (20, 110) aus einem Harz gemacht ist.

6. Der Stator (10, 100) für eine rotierende elektrische Maschine nach irgendeinem der Ansprüche 1 bis 5, wobei der Stift (16, 106) durch einen Federstift vorgesehen ist.

7. Der Stator (10) für eine rotierende elektrische Maschine nach irgendeinem der Ansprüche 1 bis 6, wobei sich der Zahn (18) weiter auswärts als der Kern (12) in der radialen Richtung des Kerns (12) erstreckt.

8. Der Stator (100) für eine rotierende elektrische Maschine nach irgendeinem der Ansprüche 1 bis 6, wobei sich der Zahn (108) weiter inwärts als der Kern (12) in der radialen Richtung des Kerns (12) erstreckt.

9. Der Stator (100) für eine rotierende elektrische Maschine nach Anspruch 8, wobei
der Kern (102) weiterhin eine zweite Ausnehmung (116) beinhaltet, die sich zu dem Zahn (108) öffnet und sich auswärts in der radialen Richtung des Kerns (102) vertieft.
sich die erste Ausnehmung (118) auswärts in der radialen Richtung des Kerns (102) von einer Bodenfläche der zweiten Ausnehmung (116) vertieft, und
der Zahnhauptkörper (122) und der Krempenabschnitt (124a, 124b) konfiguriert sind, in Kontakt mit der Bodenfläche der zweiten Ausnehmung (116) zu kommen, wenn der Stift (106) in das Stiftloch (132) gepresst wird.

## Revendications

1. Stator (10, 100) pour une machine électrique tournante, comprenant :
un noyau annulaire (12, 102) ;
une dent (18, 108) s'étendant dans une direction radiale du noyau (12, 102) et reliée au noyau (12, 102) ;
une bobine (22, 112) enroulée autour de la dent (18, 108) ; et
une goupille (16, 106) pour fixer la dent (18, 108) au noyau (12, 102) ; où
le noyau (12, 102) comporte un premier évidement (26, 118) débouchant vers la dent (18, 108) et s'élargissant progressivement depuis la dent (18, 108) vers le noyau (12, 102) dans la direction radiale du noyau (12, 102),
la dent (18, 108) comporte un corps principal de dent (30, 122) autour duquel la bobine (22, 112) est enroulée ; une languette (36, 128) faisant saillie depuis une partie d'extrémité côté noyau du corps principal de dent (30, 122) vers le noyau (12, 102), avec une largeur progressivement croissante, et pouvant être ajustée dans le premier évidement (26, 118) ; une fente (38, 130) s'étendant depuis une partie de pointe (44, 134) de la languette (36, 128) dans la direction radiale du noyau (12, 102), étant formée à partir d'une première partie d'extrémité de la languette (36, 128) dans une direction axiale du noyau (12, 102) jusqu'à une deuxième partie d'extrémité de la languette (36, 128) ; et un trou de goupille (40, 132) formé dans la fente (38, 130) et traversant la languette (36, 128) dans la direction axiale du noyau (12, 102) ;
la goupille (16, 106) peut être pressée dans le trou de goupille (40, 132) dans un état dans lequel le premier évidement (26, 118) et la languette (36, 128) sont ajustés l'un(e) à l'autre ; et
la dent (18, 108) comporte en outre une partie de bord (32a, 32b, 124a, 124b) faisant saillie depuis la partie d'extrémité côté noyau du corps principal de dent (30, 122) dans une direction perpendiculaire à la direction axiale du noyau (12, 102) et à la direction radiale du noyau (12, 102), au-delà de la partie d'extrémité côté noyau du corps principal de dent (30, 122) ; et où
la languette (36, 128) est configurée pour s'élargir dans des directions qui sont perpendiculaires à la direction axiale du noyau (12, 102) et à la direction radiale du noyau (12, 102) et pour presser le premier évidement (26, 118) lorsque la goupille (16, 106) est pressée dans le trou de goupille (40, 132) dans l'état où le premier évidement (26, 118) et la languette (36, 128) sont ajustés l'un(e) à l'autre, établissant un contact uniforme entre l'évidement (26, 118) et la languette (36, 128), entièrement depuis une partie de base (45, 135) de la languette (36, 128) jusqu'à la partie de pointe (44, 134) de la languette (36, 128) et amenant le noyau (12, 102) et la partie de bord (32a, 32b, 124a, 124b) de la dent (18, 108) en contact ferme, fixant ainsi la dent (18, 108) au noyau (12, 102) ; où
le stator (10, 100) comprend en outre :
un isolant (20, 110) attaché à la dent (18, 108) ; où
la bobine (22, 112) est enroulée autour de la dent (18, 108), avec l'isolant (20, 110) entre les deux ;
dans un état où le premier évidement (26, 118) et la languette (36, 128) sont ajustés l'un(e) à l'autre et avant que la goupille (16, 106) ne soit pressée dans le trou de goupille (40, 132), il existe un plus grand espace entre une surface latérale du premier évidement (26, 118) et une surface latérale de la languette (36, 128) dans une direction circonférentielle du noyau (12, 102) sur un côté plus proche de la partie de pointe (44, 134) de la languette (36, 128) que sur un côté plus proche de la partie de base (45, 135) de la languette (36, 128).

2. Stator (10) pour une machine électrique tournante selon la revendication 1, dans lequel
la fente (38) s'étend de la partie de pointe (44, 134) de la languette (36) à une partie du corps principal de dent (30) dans la direction radiale du noyau (12), et
le centre du trou de goupille (40) dans la direction radiale du noyau (12) est plus proche du corps principal de dent (30) qu'un centre de la fente (38) dans la direction radiale du noyau (12).

3. Stator (10) pour une machine électrique tournante selon la revendication 1 ou 2, dans lequel au moins une partie du trou de goupille (40) est formée dans le corps principal de dent (30).

4. Stator (10) pour une machine électrique tournante selon l'une des revendications 1 à 3, dans lequel une pluralité de dents (18) sont disposées dans la direction circonférentielle du noyau (12), et deux dents mutuellement adjacentes des dents (18) ont leurs parties de bord (32a, 32b) en contact l'une avec l'autre.

5. Stator (10, 100) pour une machine électrique tournante selon l'une des revendications 1 à 4, dans lequel la dent (18, 108) est réalisée en métal, et l'isolant (20, 110) est réalisé en résine.

6. Stator (10, 100) pour une machine électrique tournante selon l'une des revendications 1 à 5, dans lequel la goupille (16, 106) est fournie par une goupille à ressort.

7. Stator (10) pour une machine électrique tournante selon l'une des revendications 1 à 6, dans lequel la dent (18) s'étend plus vers l'extérieur que le noyau (12) dans la direction radiale du noyau (12).

8. Stator (100) pour une machine électrique tournante selon l'une des revendications 1 à 6, dans lequel la dent (108) s'étend plus vers l'intérieur que le noyau (102) dans la direction radiale du noyau (102).

9. Stator (100) pour une machine électrique tournante selon la revendication 8, dans lequel
le noyau (102) comporte en outre un deuxième évidement (116) débouchant vers la dent (108) et s'évidant vers l'extérieur dans la direction radiale du noyau (102),
le premier évidement (118) est évidé vers l'extérieur dans la direction radiale du noyau (102) à partir d'une surface inférieure du deuxième évidement (116), et
le corps principal de dent (122) et la partie de bord (124a, 124b) sont configurés pour venir en contact avec la surface inférieure du deuxième évidement (116) lorsque la goupille (106) est pressée dans le trou de goupille (132).
